(19) Europäisches Patentamt / European Patent Office / Office européen des brevets

(11) **EP 3 527 491 B1**

(12) **FASCICULE DE BREVET EUROPEEN**

(45) Date de publication et mention
de la délivrance du brevet:
**29.04.2020 Bulletin 2020/18**

(21) Numéro de dépôt: **19153898.2**

(22) Date de dépôt: **28.01.2019**

(51) Int Cl.:
**B64C 27/467** *(2006.01)* **B64C 27/473** *(2006.01)*

(54) **METHODE D'AMELIORATION D'UNE PALE AFIN D'AUGMENTER SON INCIDENCE NEGATIVE DE DECROCHAGE**

**METHODE ZUR VERBESSERUNG EINES ROTORBLATTS ZUR STEIGERUNG SEINER NEGATIVEN AUSWIRKUNGEN DES STRÖMUNGSABRISSES**

**METHOD FOR IMPROVING A BLADE IN ORDER TO INCREASE ITS NEGATIVE STALLING INCIDENCE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2018 FR 1870167**

(43) Date de publication de la demande:
**21.08.2019 Bulletin 2019/34**

(73) Titulaire: **Airbus Helicopters**
**13725 Marignane Cedex (FR)**

(72) Inventeurs:
• **FUKARI, Raphaël**
**13740 Le Rove (FR)**
• **EGLIN, Paul**
**13830 Roquefort La Bedoule (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 103 478** **JP-A- 2002 166 891**
**US-A1- 2007 187 549** **US-A1- 2008 145 219**
**US-A1- 2009 257 884** **US-A1- 2013 170 984**

**Description**

La présente invention est du domaine des profils aérodynamiques de pales et plus particulièrement des pales destinées à former une hélice d'avancement d'un aéronef.

La présente invention concerne une méthode d'amélioration d'une pale afin d'augmenter son incidence négative de décrochage en valeur absolue. Cette pale améliorée est destinée à équiper un rotor d'un aéronef devant fournir une force aérodynamique selon deux directions opposées, à savoir soit une force vers l'avant de l'aéronef, soit une force vers l'arrière de l'aéronef. Cette pale améliorée est en particulier destinée à une hélice d'avancement d'un aéronef ou encore à un rotor auxiliaire anticouple d'un aéronef à voilure tournante.

Classiquement, une pale s'étend longitudinalement selon son envergure d'une première extrémité vers une deuxième extrémité. On remarque que le terme « longitudinal » se comprend comme au sens de l'envergure de la pale. De plus, la pale s'étend transversalement d'un bord d'attaque vers un bord de fuite, selon les cordes de la pale.

La pale comprend notamment un revêtement extérieur muni d'une première peau au niveau de son extrados et d'une seconde peau au niveau de son intrados ainsi que de sections transversales successives. Chaque section transversale est définie par un profil aérodynamique comportant deux demi-profils, à savoir un demi-profil d'intrados et un demi-profil d'extrados.

Des profils aérodynamiques existants et utilisés fréquemment pour les pales des rotors d'aéronefs sont par exemple définis selon les familles *NACA* ou bien les familles *OA,* les familles *OA* étant par exemple décrites dans les documents FR 2626841 et FR 2765187.

Une pale est destinée à être fixée à un moyeu tournant d'un rotor au niveau de sa première extrémité par l'intermédiaire d'un pied de pale, sa deuxième extrémité étant dite extrémité libre. Ce moyeu tournant du rotor entraîne en rotation chaque pale. Par rapport au rotor, on comprend que la pale s'étend radialement de la première extrémité vers la deuxième extrémité. Un rotor comporte au moins deux pales.

Chaque pale d'un rotor fournit, sous l'effet d'un écoulement d'air généré par la rotation du rotor, une force aérodynamique, désignée généralement poussée. Cette force aérodynamique est notamment variable selon un angle d'incidence aérodynamique de la pale, à savoir un angle entre l'écoulement d'air et une droite reliant le bord d'attaque et le bord de fuite de ce profil aérodynamique correspondant à la corde de la pale. Pour un rotor, cet angle d'incidence est généralement modifié en agissant sur un axe de variation de pas de la pale. Cet axe de variation de pas s'étend sensiblement longitudinalement selon l'envergure de la pale. Par la suite, on utilisera le terme « incidence » pour désigner plus simplement l'angle d'incidence aérodynamique de la pale.

On observe à partir d'une incidence seuil de la pale, désigné « incidence de décrochage », un décollement des filets d'air notamment au niveau du bord d'attaque ou bien du bord de fuite de la pale. Ce décollement peut provoquer un décrochage aérodynamique de la pale correspondant à une chute brutale de sa poussée. De plus, le décollement des filets d'air génère des tourbillons qui sont à l'origine d'une augmentation du coefficient de traînée de la pale et de vibrations.

Un rotor peut être un rotor principal d'un aéronef à voilure tournante permettant de sustenter l'aéronef, voire de le propulser. Un rotor peut aussi être un rotor auxiliaire anticouple d'un aéronef à voilure tournante. Un rotor peut également être une hélice d'avancement d'un aéronef à voilure fixe ou bien à voilure tournante, chaque pale fournissant une force aérodynamique permettant l'avancement de l'aéronef. Un aéronef peut comporter par exemple une ou deux, voire quatre hélices d'avancement.

Chaque pale d'un rotor fournit généralement lors de la rotation du rotor une force aérodynamique majoritairement, voire uniquement selon une seule direction, dans le but de fournir par exemple pour un rotor principal une poussée s'opposant au poids de l'aéronef à voilure tournante. Dans le cas d'une hélice d'avancement, cette force aérodynamique permet à l'aéronef d'avancer et d'atteindre des vitesses d'avancement élevées.

Cependant, cette force aérodynamique peut dans certains cas particuliers être inversée par exemple pour une hélice d'avancement afin de provoquer un ralentissement de l'aéronef, essentiellement lors de son atterrissage. Ce fonctionnement particulier est toutefois transitoire, voire marginal.

En conséquence, chaque pale est définie pour fournir de façon optimale une force aérodynamique selon une seule direction, chaque pale fonctionnant alors avec une incidence positive. Dans ce but, la cambrure des profils aérodynamiques de la pale est généralement augmentée.

La cambrure est une caractéristique d'un profil aérodynamique égale à la distance entre d'une part la corde du profil aérodynamique et d'autre part une ligne de demi-épaisseur ou « ligne moyenne » de ce profil aérodynamique, c'est-à-dire se trouvant à équidistance des demi-profils d'intrados et d'extrados par rapport à chaque normale à la ligne moyenne. La distance entre la corde et la ligne moyenne est prise perpendiculairement à la corde et, par suite, une augmentation positive de cambrure correspond à une augmentation positive de ladite distance. En particulier, une cambrure est nulle lorsque le profil aérodynamique est symétrique. A contrario, un profil aérodynamique avec une cambrure non nulle est un profil aérodynamique asymétrique.

L'augmentation positive de la cambrure des profils aérodynamiques d'une pale a pour effet d'augmenter l'incidence positive de décrochage de cette pale. De fait, l'incidence positive de la pale peut être augmentée lors sa rotation, augmentant en conséquence la force aérodynamique générée par la pale et ses performances aérodynamiques.

On constate alors que, la puissance mécanique nécessaire pour entraîner en rotation un rotor comportant de telles pales à profils aérodynamiques cambrés afin de fournir une force aérodynamique donnée sous une incidence positive est réduite par rapport à des pales à profils aérodynamiques non cambrés, en particulier en se rapprochant de la force aérodynamique maximale que peut fournir cette pale.

Des telles pales sont par exemple décrites dans le document FR 2765187. Selon ce document, la position de la cambrure maximale d'un profil aérodynamique le long de sa corde peut aussi être ajustée selon l'épaisseur relative du profil aérodynamique.

A contrario, l'augmentation de la cambrure des profils aérodynamiques a comme effet inverse de diminuer, en valeur absolue, et donc d'augmenter en valeur algébrique, l'incidence négative de décrochage de la pale. Toutefois, cette augmentation de l'incidence négative de décrochage n'est pas problématique, la pale fonctionnant essentiellement, voire uniquement sous une incidence positive.

On connaît également plusieurs documents décrivant des pales formées de profils aérodynamiques permettant d'améliorer les performances aérodynamiques de ces pales.

Par exemple, le document US 2007/0187549 décrit un profil aérodynamique amélioré pour former une pale d'un rotor d'hélicoptère, de préférence pour un hélicoptère comportant un double rotor contrarotatif et une hélice de propulsion permettant à l'hélicoptère de voler avec des vitesses d'avancement importantes. Un tel profil aérodynamique amélioré comporte une épaisseur réduite et une cambrure réduite au niveau d'une région de bord d'attaque de ce profil. Ce profil aérodynamique amélioré est adapté pour les écoulements d'air à grandes vitesses en retardant la formation d'une onde de choc aux vitesses d'avancement élevées.

De plus, les documents EP 0103478 et JP 2002/166891 décrivent des profils aérodynamiques avec un grand rayon de bord d'attaque afin, par exemple selon le document EP 0103478, de retarder la formation d'une onde de choc lorsque la vitesse d'avancement de l'aéronef augmente et d'obtenir des valeurs importantes du rapport portance/traînée sur une large plage de vitesse d'avancement.

Le document US 2009/0257884 décrit également un profil aérodynamique avec un rayon de bord d'attaque important, ce profil aérodynamique étant destiné à former une pale d'éolienne.

En outre, le document US 2008/0145219 décrit une pale d'un rotor d'hélicoptère comportant un ou plusieurs générateurs de vortex. Chaque générateur de vortex permet à la pale d'être plus tolérant en termes d'angles d'incidence et de nombre de Mach avant de décrocher. De plus, un profil aérodynamique d'une telle pale peut comporter un rayon de bord d'attaque adapté, voire ajustable afin d'optimiser ses performances.

On connait enfin le document US 2013/0170984 qui décrit une turbine à vapeur dont les aubes sont vrillées sur toute leur longueur afin de limiter l'apparition de vibration sur la turbine et dont le bord d'attaque peut être rayonné afin d'optimiser les performances des aubes et de la turbine.

Entre outre, un aéronef à voilure tournante, désigné également « giravion », peut évoluer aussi bien avec des vitesses d'avancement élevées lors de vols de croisière qu'avec de très faibles vitesses d'avancement et réaliser des vols stationnaires. Un giravion comporte classiquement un fuselage, au moins un rotor principal, un dispositif anticouple et une installation motrice.

Un dispositif anticouple assure une fonction anticouple afin de s'opposer à un couple rotor en lacet généré principalement par la rotation du rotor principal de l'aéronef. Un dispositif anticouple est constitué par exemple par un rotor auxiliaire agencé sur une extrémité arrière d'une poutre de queue de l'aéronef. Ce rotor auxiliaire anticouple permet de créer, par l'intermédiaire de la force aérodynamique générée par ses pales, un moment s'opposant au couple rotor.

On connaît aussi un hélicoptère hybride qui désigne un giravion comportant au moins un rotor principal, un fuselage, une installation motrice et une propulsion auxiliaire ainsi que généralement une surface sustentatrice, composée par exemple de deux ailes situées de part et d'autre du fuselage. La propulsion auxiliaire peut être formée par une ou plusieurs hélices d'avancement, par exemple deux hélices d'avancement positionnées de part et d'autre du fuselage.

Cette propulsion auxiliaire peut constituer le dispositif anticouple de l'hélicoptère hybride, notamment lorsque cette propulsion auxiliaire comporte deux hélices d'avancement agencées de part et d'autre du fuselage. Dans ce cas, les hélices d'avancement fournissent des forces aérodynamiques différentielles provoquant l'apparition d'un moment s'opposant au couple rotor. En particulier lors d'un vol stationnaire, une première hélice d'avancement agencée d'un côté du fuselage fournit une force aérodynamique vers l'avant du giravion alors qu'une seconde hélice d'avancement agencée de l'autre côté du fuselage fournit une force aérodynamique vers l'arrière du giravion.

De fait, cette seconde hélice d'avancement doit fournir une force aérodynamique vers l'avant du giravion lors des vols d'avancement du giravion et une force aérodynamique vers l'arrière du giravion lors des vols stationnaires alors que la première hélice d'avancement fournit toujours une force aérodynamique vers l'avant du giravion quelle que soit la phase de vol du giravion. Pour inverser la force aérodynamique de cette seconde hélice d'avancement, chaque pale de la seconde hélice d'avancement doit alors passer d'une incidence positive pour les vols d'avancement à une incidence négative pour les vols stationnaires alors que chaque pale de la première hélice d'avancement a toujours une incidence positive quelle que soit la phase de vol du giravion.

Comme évoqué précédemment, chaque pale d'une hélice d'avancement est définie pour fournir de façon optimale une force aérodynamique selon une seule direction, chaque pale ayant alors une incidence positive. De fait, chaque pale de la première et de la seconde hélice d'avancement sont de préférence définies pour fournir une force aérodynamique importante dirigée vers l'avant de l'hélicoptère hybride et comportent par exemple des profils aérodynamiques asymétriques permettant des performances aérodynamiques importantes sous des incidences positives.

En conséquence, en vol stationnaire, chaque pale de la seconde hélice d'avancement fournit une force aérodynamique dirigée vers l'arrière de l'hélicoptère hybride avec des profils aérodynamiques non optimisés pour cela. En particulier, chaque pale de la seconde hélice d'avancement peut fonctionner avec une incidence négative proche d'une incidence négative de décrochage de la pale. Les profils aérodynamiques asymétriques usuels présentent dans ce cas des performances aérodynamiques non optimales, la cambrure de leurs profils aérodynamiques étant inadaptée à ces incidences négatives.

Dès lors, cette seconde hélice d'avancement nécessite une puissance mécanique plus importante pour être entraînée en rotation en vol stationnaire, et en particulier une puissance plus importante que la première hélice d'avancement générant une force aérodynamique sensiblement identique mais dirigée uniquement vers l'avant du giravion.

Une solution afin d'augmenter les performances aérodynamiques de la pale sous des incidences négatives est de diminuer la cambrure des profils aérodynamiques de la pale, voire de l'inverser. Cependant, cette solution est contradictoire avec les performances recherchées en vol d'avancement comme évoqué précédemment.

L'utilisation de pales avec des profils aérodynamiques symétriques, par exemple issus de la famille *NACA,* permettrait d'avoir un comportement aérodynamique sensiblement identique de la pale soumise à un écoulement d'air sous une incidence positive ou bien une incidence négative, en adaptant éventuellement le vrillage de la pale. Cependant, l'utilisation de pales avec de tels profils aérodynamiques symétriques ne permet pas d'obtenir des forces aérodynamiques importantes aussi bien vers l'avant que vers l'arrière du giravion, quelle que soit l'incidence de la pale et, nécessiterait de fait des puissances mécaniques plus importantes pour entraîner ces pales en rotation afin de fournir les forces aérodynamiques nécessaires.

Dans ces conditions, la présente invention propose une méthode d'amélioration d'une pale permettant de s'affranchir des limitations mentionnées ci-dessus et de modifier les profils aérodynamiques d'une pale existante afin d'obtenir des performances aérodynamiques supérieures aux performances aérodynamiques de cette pale existante. En conséquence, l'incidence négative de décrochage de cette pale modifiée est augmentée en valeur absolue, permettant à la pale modifiée de fournir une force aérodynamique inversée importante sous une incidence négative sans dégrader la force aérodynamique fournie sous une incidence positive.

De la sorte, cette pale modifiée permet d'obtenir des performances aérodynamiques élevées dans deux directions opposées, selon le besoin, tout en minimisant la puissance nécessaire à la rotation de ces pales modifiées, y compris sous des incidences négatives.

La présente description divulgue aussi une pale améliorée par cette méthode ainsi qu'un rotor comportant au moins deux pales ainsi améliorées et un aéronef à voilure tournante comportant deux telles hélices d'avancement dont une hélice formée par ce rotor.

Une pale s'étend selon une direction longitudinale en envergure d'une première extrémité à une seconde extrémité et selon une direction transversale d'un bord d'attaque vers un bord de fuite. La pale comporte des sections transversales successives, chaque section transversale étant définie par un profil aérodynamique, chaque profil aérodynamique étant défini notamment par deux demi-profils incluant un demi-profil d'extrados et un demi-profil d'intrados, les deux demi-profils comportant respectivement un tronçon de bord d'attaque, un tronçon intermédiaire et un tronçon terminal, le tronçon de bord d'attaque de chaque demi-profil étant formé par une portion d'un cercle initial de bord d'attaque. Pour chaque profil, le tronçon de bord d'attaque débute au bord d'attaque, le tronçon terminal se termine au bord de fuite et le tronçon intermédiaire est situé entre le tronçon de bord d'attaque et le tronçon terminal.

Cette pale est reliée à un moyeu tournant d'un rotor au niveau de la première extrémité de la pale par l'intermédiaire d'un pied de pale. Ce pied de pale à une fonction essentiellement structurale, sa contribution aux performances aérodynamiques du rotor étant secondaire. On considère donc dans le cadre de l'invention qu'une pale est donc constituée uniquement par une partie profilée qui fournit pour chaque pale du rotor l'essentiel des forces aérodynamiques du rotor.

Selon l'invention, la méthode d'amélioration d'une pale comporte une première étape de modification d'au moins un demi-profil d'au moins un profil aérodynamique, la première étape de modification étant munie des sous-étapes suivantes :

- augmentation du rayon du cercle initial de bord d'attaque de cet au moins un demi-profil afin de former un nouveau cercle de bord d'attaque de cet au moins un demi-profil dont une portion constitue un nouveau tronçon de bord d'attaque de cet au moins un demi-profil, le nouveau cercle de bord d'attaque de cet au moins un demi-profil étant tangent au cercle initial de bord d'attaque de cet au moins un demi-profil au niveau du bord d'attaque, et

- définition d'un nouveau tronçon intermédiaire de cet au moins un demi-profil remplaçant le tronçon intermédiaire de cet au moins un demi-profil et raccordant le nouveau cercle de bord d'attaque de cet au moins un demi-profil au tronçon terminal de cet au moins un demi-profil afin d'augmenter une incidence négative de décrochage de la pale.

Lors de cette première étape, un seul des deux demi-profils de chaque profil aérodynamique peut être modifié, à savoir le demi-profil d'extrados ou bien le demi-profil d'intrados. Les deux demi-profils de chaque profil aérodynamique peuvent aussi être modifiés lors de cette première étape.

En effet, les demi-profils d'extrados et d'intrados sont généralement caractérisés par les coordonnées de points permettant leurs constructions. De plus, les tronçons de bord d'attaque de ces deux demi-profils peuvent être de forme circulaire et formés respectivement par une portion du cercle initial de bord d'attaque, le rayon et les coordonnées du centre de chaque cercle initial de bord d'attaque étant connus de la définition des demi-profils d'extrados et d'intrados, comme décrit dans le document EP 0911257. Les portions de ces cercles initiaux de bord d'attaque des deux demi-profils sont alors respectivement confondues avec les tronçons de bord d'attaque de ces deux demi-profils du profil aérodynamique, les rayons respectifs des cercles initiaux de bord d'attaque étant égaux aux rayons des tronçon de bord d'attaque des demi-profils. Dans ce cas, les cercles initiaux de bord d'attaque des deux demi-profils sont généralement de même centre et de même rayon.

Lorsque les tronçons de bord d'attaque des demi-profils d'extrados et d'intrados ne sont pas des portions de cercles, au moins un de ces cercles initiaux de bord d'attaque des deux demi-profils peut être déterminé à posteriori, au cours d'une étape préliminaire de la méthode selon l'invention afin de caractériser le tronçon de bord d'attaque. Le cercle initial de bord d'attaque du demi-profil d'extrados et/ou du demi-profil d'intrados est ainsi estimé par une construction géométrique à partir respectivement des tronçons de bord d'attaque de ces demi-profils d'extrados et d'intrados. Les cercles initiaux de bord d'attaque des demi-profils d'extrados et d'intrados ainsi estimés sont généralement différents, en particulier dans le cas de profils aérodynamiques ayant une cambrure non nulle. La connaissance du cercle initial de bord d'attaque d'un demi-profil et de son rayon permet avantageusement de caractériser facilement ce demi-profil afin par exemple d'identifier d'une part, des profils aérodynamiques que l'on peut qualifier de polyvalents, à savoir avec une large plage de fonctionnement mais avec des performances aérodynamiques modérées, associés à des grands rayons de cercle de bord d'attaque et d'autre part, des profils aérodynamiques à petits rayons de cercle de bord d'attaque associés à des plages de fonctionnement restreintes et à hautes performances aérodynamiques.

Cette étape préliminaire de détermination comporte des sous-étapes suivantes :

- définition d'un segment de droite reliant le bord d'attaque et le bord de fuite du profil aérodynamique,
- création d'un cercle de construction passant par le bord d'attaque du profil aérodynamique, le centre du cercle de construction étant situé sur le segment de droite, le cercle de construction étant inscrit dans le demi-profil,
- augmentation du rayon du cercle de construction, le centre du cercle de construction étant déplacé sur le segment de droite et le cercle de construction passant toujours par le bord d'attaque, jusqu'à ce que le cercle de construction soit sécant avec le demi-profil, à savoir que le cercle de construction n'est plus inscrit à l'intérieur du demi-profil, et
- détermination du cercle initial de bord d'attaque du demi-profil, le cercle initial de bord d'attaque étant le plus grand cercle de construction inscrit à l'intérieur du demi-profil, le centre du cercle initial de bord d'attaque étant le centre de ce plus grand cercle de construction inscrit à l'intérieur du demi-profil et étant situé sur le segment de droite, le rayon du cercle initial de bord d'attaque étant le rayon de ce plus grand cercle de construction inscrit à l'intérieur du demi-profil.

Cette étape préliminaire permet ainsi d'estimer le cercle initial de bord d'attaque d'un seul des deux demi-profils définissant chaque profil aérodynamique d'une pale, à savoir le demi-profil d'extrados ou le demi-profil d'intrados, et d'estimer la valeur du rayon de cercle initial de bord d'attaque.

Cette étape préliminaire permet également d'estimer les deux cercles initiaux de bord d'attaque des deux demi-profils définissant chaque profil aérodynamique d'une pale et d'estimer les valeurs de leurs rayons.

La connaissance du cercle initial de bord d'attaque d'un demi-profil et de son rayon permet également d'envisager des modifications de ce demi-profil en appliquant la première étape de la méthode d'amélioration d'une pale selon l'invention, en remplaçant préalablement le tronçon de bord d'attaque de ce demi-profil par une portion du cercle initial de bord d'attaque ainsi estimé et attaché à ce demi-profil.

De fait, dans le cadre de l'invention, le remplacement du tronçon de bord d'attaque d'un demi-profil par un cercle initial de bord d'attaque facilite par la suite la modification de ce demi-profil en modifiant notamment le rayon de ce cercle initial de bord d'attaque et former ainsi le nouveau cercle de bord d'attaque. Le nouveau tronçon de bord d'attaque est alors formé par une portion du nouveau cercle de bord d'attaque, cette portion étant de préférence constituée au maximum d'un premier quart de ce nouveau cercle de bord d'attaque, ce premier quart débutant au bord d'attaque et se situant du côté de ce demi-profil vis-à-vis du bord d'attaque. La position du bord d'attaque proprement dit de chaque profil aérodynamique est inchangée et le nouveau tronçon de bord d'attaque de ce demi-profil passe par ce bord d'attaque.

Le tronçon intermédiaire du demi-profil est quant à lui remplacé par un nouveau tronçon intermédiaire raccordant le nouveau tronçon de bord d'attaque du demi-profil, à savoir une portion du nouveau cercle de bord d'attaque, au tronçon terminal du demi-profil, ce tronçon terminal étant inchangé. Ce nouveau tronçon intermédiaire est tangent au nouveau tronçon de bord d'attaque et au tronçon terminal du demi-profil.

Ce nouveau tronçon intermédiaire a une tangence évoluant de façon continue et ne comporte de préférence aucun point d'inflexion. Le nouveau tronçon intermédiaire débute sur le nouveau cercle de bord d'attaque, c'est-à-dire le nouveau tronçon de bord d'attaque, à un point de départ situé à une première distance transversale minimale, à savoir parallèle à la direction transversale, du bord d'attaque comprise par exemple entre 0.5% et 5% d'une corde c du profil aérodynamique. Pour rappel, la corde c est égale à une distance entre le bord d'attaque et le bord de fuite du profil aérodynamique. De plus, la position du point de départ du nouveau tronçon intermédiaire sur le nouveau cercle de bord d'attaque peut être contrainte par le fait que la dérivée du polynôme définissant ce nouveau tronçon intermédiaire est positive évitant ainsi la présence d'un point d'inflexion sur ce nouveau tronçon intermédiaire. Ce nouveau tronçon intermédiaire est par exemple défini par un polynôme d'ordre 3.

En outre, le nouveau tronçon intermédiaire se raccorde au tronçon terminal à une deuxième distance transversale du bord d'attaque par exemple égale au maximum à 25% de la corde c du profil aérodynamique.

Par ailleurs, lorsque les deux demi-profils d'extrados et d'intrados sont modifiés, les rayons des nouveaux cercles de bord d'attaque des demi-profils d'extrados et d'intrados peuvent être différents pour certains profils aérodynamiques de la pale modifiée, voire pour tous les profils aérodynamiques de la pale modifiée. De préférence, le rayon du nouveau cercle de bord d'attaque du demi-profil d'intrados est inférieur ou égal au rayon du nouveau cercle de bord d'attaque du demi-profil d'extrados pour chaque profil aérodynamique de la pale.

En effet, le rayon de bord d'attaque d'un demi-profil d'intrados est généralement inférieur ou égal au rayon de bord d'attaque du demi-profil d'extrados pour un profil aérodynamique cambré qui permet d'avoir de bonnes performances en poussée positive.

Par exemple, le rayon du nouveau cercle de bord d'attaque d'un demi-profil d'extrados est compris entre 110% et 160% du rayon du cercle initial de bord d'attaque de ce demi-profil d'extrados et le rayon du nouveau cercle de bord d'attaque d'un demi-profil d'intrados est compris entre 100% et 280% du rayon du cercle initial de bord d'attaque de ce demi-profil d'intrados. De préférence, le rayon du nouveau cercle de bord d'attaque d'un demi-profil d'extrados est compris entre 110% et 140% du rayon du cercle initial de bord d'attaque de ce demi-profil d'extrados et le rayon du nouveau cercle de bord d'attaque d'un demi-profil d'intrados est compris entre 115% et 220% du rayon du cercle initial de bord d'attaque de ce demi-profil d'intrados. Les valeurs de ces pourcentages peuvent être influencées par l'épaisseur relative de chaque profil aérodynamique de la pale, à savoir le rapport entre son épaisseur maximale $e$ et sa corde $c$.

En outre, un premier rapport du rayon du nouveau cercle de bord d'attaque d'un demi-profil par le rayon du cercle initial de bord d'attaque de ce demi-profil n'est de préférence pas le même pour chaque profil aérodynamique de la pale.

De plus, l'épaisseur $e$ du profil aérodynamique est de préférence inchangée pour chaque profil aérodynamique de la pale, la corde $c$ pouvant, quant à elle, être légèrement modifiée. On rappelle que l'épaisseur $e$ d'un profil aérodynamique est égale à une distance maximale entre les deux demi-profils définissant le profil aérodynamique, à savoir le demi-profil d'intrados et le demi-profil d'extrados, perpendiculairement à la ligne moyenne de ce profil aérodynamique.

Avantageusement, les performances aérodynamiques de cette pale modifiée, dont les profils aérodynamiques ont été modifiés, sont ainsi améliorées et supérieures sous des incidences négatives aux performances aérodynamiques de la pale avant modification. En effet, cette augmentation du rayon du cercle initial de bord d'attaque d'un ou bien des deux demi-profils définissant chaque profil aérodynamique de la pale permet de modifier l'écoulement d'air sur ces demi-profils de la pale modifiée en particulier sous des incidences négatives et, par suite, d'augmenter en valeur absolue, donc de diminuer en valeur algébrique l'incidence négative de décrochage de la pale modifiée. L'incidence positive de décrochage de la pale modifiée est également diminuée suite à la modification des demi-profils. Cependant, la zone d'utilisation de la pale concerne des incidences positives qui restent inférieures à l'incidence positive de décrochage de la pale modifiée.

De la sorte, les performances aérodynamiques de la pale sous une incidence positive ne sont sensiblement pas modifiées, hormis le décalage de l'incidence positive de décrochage. La pale modifiée peut ainsi fournir une force aérodynamique inversée sous une incidence négative sans dégradation d'une force aérodynamique fournie sous une incidence positive. En particulier, la pente d'une courbe reliant le coefficient de portance $Cz$ de la pale à son angle d'incidence est sensiblement identique pour une pale modifiée par la méthode selon la présente invention et une pale non modifiée.

En conséquence, un rotor équipé de telles pales modifiées par la méthode d'amélioration d'une pale selon l'invention peut avantageusement fournir une force aérodynamique inversée, les pales de ce rotor étant sous une incidence négative, et réduire alors la puissance nécessaire à la rotation du rotor par rapport à un rotor muni de pales non modifiées et devant fournir la même force aérodynamique inversée. Cette réduction de la puissance nécessaire à la rotation du rotor est avantageusement obtenue uniquement par une modification la zone du bord d'attaque des profils aérodynamique de la pale, le diamètre du rotor et le nombre de pales qu'il comporte restant inchangés.

Cette pale améliorée est notamment destinée aux hélices d'avancement des aéronefs et en particulier aux hélices d'avancement des hélicoptères hybrides, un tel rotor étant alors une hélice d'avancement.

Un hélicoptère hybride muni de deux hélices d'avancement comporte ainsi une première hélice d'avancement munie de pales non modifiées et une seconde hélice d'avancement munie de pales modifiées par la méthode d'amélioration d'une pale selon l'invention, cette seconde hélice d'avancement étant destinée à fournir une force aérodynamique inversée lors d'un vol stationnaire de l'hélicoptère hybride. La méthode d'amélioration d'une pale selon la présente invention permet ainsi avantageusement d'améliorer les performances du dispositif anticouple de l'hélicoptère hybride en vol stationnaire, ce dispositif anticouple étant formé par les hélices d'avancement.

La puissance développée par l'installation motrice de l'hélicoptère hybride pour entraîner en rotation cette seconde hélice d'avancement est ainsi réduite, la puissance économisée pouvant alors être utilisée par exemple pour augmenter la charge utile de l'hélicoptère hybride. Cette réduction de la puissance nécessaire à la rotation de la seconde hélice d'avancement peut aussi avoir pour conséquence une optimisation de l'installation motrice de l'hélicoptère hybride et, par suite, une baisse de la masse totale de l'aéronef.

De plus, en repoussant la limite de décrochage sous une incidence négative, les marges de manœuvrabilité de l'hélicoptère hybride sont également améliorées et, en conséquence, la sécurité de ces vols.

Cette méthode est destinée à être appliquée à des pales dont les sections transversales successives sont formées par des profils aérodynamiques existants, qui peuvent être aussi bien symétriques qu'asymétriques. Ces profils aérodynamiques existants sont par exemple utilisés fréquemment et définis selon les familles *NACA* ou bien les familles *OA,* et en particulier selon les familles *OA3* et *OA4.*

La méthode d'amélioration d'une pale selon la présente invention comporte également une deuxième étape de déplacement du bord d'attaque pour chaque profil aérodynamique de la pale, la deuxième étape étant munie des sous-étapes suivantes :

- déplacement du bord d'attaque de chaque profil aérodynamique de la pale d'une troisième distance perpendiculairement au segment de droite, du demi-profil d'intrados vers le demi-profil d'extrados, les tronçons de bord d'attaque initiaux ou bien, le cas échéant, les nouveaux tronçons de bord d'attaque des deux demi-profils du profil aérodynamique étant également déplacés, et
- définition de nouveaux tronçons intermédiaires des deux demi-profils raccordant respectivement les tronçons de bord d'attaque initiaux ou bien les nouveaux tronçons de bord d'attaque des deux demi-profils aux tronçons terminaux de ces deux demi-profils.

Dès lors, pour chaque demi-profil, un nouveau tronçon intermédiaire raccorde le tronçon de bord d'attaque ou bien le nouveau tronçon de bord d'attaque ayant préalablement remplacé le tronçon de bord d'attaque lors de la première étape de la méthode, ainsi déplacé au tronçon terminal du demi-profil, ce tronçon terminal étant inchangé.

Ce déplacement du bord d'attaque de chaque profil aérodynamique « vers le demi-profil d'extrados » provoque une modification de la ligne moyenne de chaque profil aérodynamique de la pale dans la zone du bord d'attaque. Ce déplacement du bord d'attaque de chaque profil aérodynamique provoque ainsi une modification de la cambrure de chaque profil aérodynamique de la pale, mais sans inverser cette cambrure (conservation du sens de la cambrure), qui se trouve réduite. Cette modification de la position du bord d'attaque de chaque profil aérodynamique de la pale modifiée et la modification de sa ligne moyenne permettent à nouveau de modifier l'écoulement d'air sur les deux demi-profils de la pale modifiée, en particulier sous des incidences négatives. En conséquence, l'incidence négative de décrochage de la pale modifiée est augmentée en valeur absolue, donc diminuée en valeur algébrique, et l'incidence positive de décrochage de la pale modifiée est diminuée tout en restant en dehors de la zone d'utilisation de la pale.

De fait, les performances aérodynamiques de cette pale modifiée sont une fois de plus avantageusement améliorées et la pale ainsi modifiée peut fournir une force aérodynamique inversée sous une incidence négative sans dégradation d'une force aérodynamique fournie sous une incidence positive.

La troisième distance est par exemple comprise entre 0.5% et 2% de la corde *c* du profil aérodynamique afin de ne pas modifier de façon importante le comportement aérodynamique de la pale modifiée et en particulier les performances aérodynamiques sous des incidences positives. De préférence, la troisième distance est comprise entre 1% à 1.5% de la longueur de la corde *c.*

Suite à ce déplacement du bord d'attaque de chaque profil aérodynamique, les conditions de raccordement entre le nouveau tronçon intermédiaire et d'une part le nouveau cercle de bord d'attaque et d'autre part le tronçon terminal sont identiques à celles citées pour la première étape de la méthode selon l'invention pour chaque demi-profil. Notamment, le nouveau tronçon intermédiaire de chaque demi-profil a des tangences évoluant de façon continue et ne comportent toujours de préférence aucun point d'inflexion. De même, le nouveau tronçon intermédiaire débute sur le nouveau cercle de bord d'attaque à un point de départ situé à une première distance transversale minimale du bord d'attaque comprise par exemple entre 0.5% et 5% d'une corde *c* du profil aérodynamique et se raccorde au tronçon terminal à une deuxième distance transversale du bord d'attaque égale par exemple au maximum à 25% de la corde *c*.

La méthode d'amélioration d'une pale selon l'invention comporte aussi une troisième étape de fabrication d'une pale visant à fabriquer une pale définie par les profils aérodynamiques modifiés telles que précédemment décrits. Ces profils aérodynamiques sont modifiés selon les première et deuxième étapes.

La présente description divulgue aussi une pale modifiée, dite aussi « pale améliorée » dans ce texte, définie par les profils aérodynamiques modifiés par les étapes de la méthode d'amélioration d'une pale précédemment décrites. Cette pale est réalisée en utilisant ces profils aérodynamiques modifiés.

Ci-après sont présentées à titre d'exemple les coordonnées dans un repère (u,v) des points constituant un profil aérodynamique OA312 et un profil aérodynamique OA312 modifié selon la méthode exposée. L'origine de ce repère (u,v) est positionnée au bord d'attaque du profil aérodynamique OA312 non modifié et son axe des abscisses u est défini selon la corde initiale de ce profil aérodynamique OA312 non modifié.

| OA 312 initial | | OA 312 modifié | |
|---|---|---|---|
| u | v | u | v |
| 1 | -0.001786945 | 1 | -0.001786945 |
| 0.99308697 | -0.001988992 | 0.993196671 | -0.001985598 |
| 0.98618332 | -0.002215004 | 0.986394068 | -0.002207676 |
| 0.97928141 | -0.002488529 | 0.979593055 | -0.002474188 |
| 0.97238481 | -0.002873193 | 0.972797017 | -0.002846444 |
| 0.96549693 | -0.003391046 | 0.966009283 | -0.00334798 |
| 0.95861932 | -0.004031037 | 0.959231538 | -0.003969973 |
| 0.95175004 | -0.004755215 | 0.952462167 | -0.004677375 |
| 0.94488588 | -0.005526345 | 0.945698087 | -0.00543364 |
| 0.9380239 | -0.006316667 | 0.938936411 | -0.006211139 |
| 0.93116231 | -0.007110455 | 0.932175284 | -0.00699338 |
| 0.92430036 | -0.007901099 | 0.925413868 | -0.007773122 |
| 0.91743785 | -0.008686784 | 0.918651913 | -0.008548178 |
| 0.91057473 | -0.009467167 | 0.911889371 | -0.009318091 |
| 0.90371098 | -0.010242006 | 0.905126235 | -0.010082772 |
| 0.89684642 | -0.011009672 | 0.898362357 | -0.010840856 |
| 0.88998083 | -0.011767963 | 0.891597532 | -0.011590451 |
| 0.88311385 | -0.012513652 | 0.884831428 | -0.012328409 |
| 0.87624547 | -0.013246371 | 0.878063944 | -0.013053601 |
| 0.86937573 | -0.013966138 | 0.871295153 | -0.013766489 |
| 0.86250431 | -0.014669695 | 0.864524839 | -0.01446477 |
| 0.855631 | -0.015354588 | 0.857752694 | -0.015145064 |
| 0.84875609 | -0.016023159 | 0.850978899 | -0.015808721 |
| 0.84187951 | -0.016674371 | 0.844203571 | -0.016456549 |
| 0.83500099 | -0.017304736 | 0.837426402 | -0.017084812 |
| 0.82812076 | -0.017916223 | 0.830647466 | -0.01769373 |
| 0.82123893 | -0.018509382 | 0.823866985 | -0.018285182 |
| 0.81435538 | -0.019082246 | 0.817084869 | -0.018857594 |
| 0.80747017 | -0.0196348 | 0.810301096 | -0.019410013 |
| 0.80058343 | -0.020167853 | 0.80351579 | -0.01994328 |
| 0.79369518 | -0.020681173 | 0.796729019 | -0.020457552 |
| 0.78680546 | -0.021174303 | 0.789940809 | -0.020952474 |
| 0.77991423 | -0.021645881 | 0.783151154 | -0.02142717 |
| 0.77302154 | -0.022095488 | 0.77636003 | -0.02188035 |
| 0.76612762 | -0.022525939 | 0.769567587 | -0.022313335 |
| 0.7592327 | -0.022940139 | 0.762774083 | -0.022729319 |
| 0.75233688 | -0.023338955 | 0.755979673 | -0.023130246 |
| 0.74544014 | -0.023721549 | 0.749184378 | -0.023515873 |

(suite)

| OA 312 initial | | OA 312 modifié | |
|---|---|---|---|
| u | v | u | v |
| 0.73854257 | -0.02408907 | 0.742388212 | -0.023885831 |
| 0.73164438 | -0.024444449 | 0.735591337 | -0.024242526 |
| 0.72474553 | -0.024787018 | 0.728793868 | -0.024587732 |
| 0.71784596 | -0.025114649 | 0.721995724 | -0.024919355 |
| 0.71094582 | -0.025430132 | 0.715196908 | -0.025236924 |
| 0.70404533 | -0.025737764 | 0.708397634 | -0.025544526 |
| 0.69714454 | -0.026038752 | 0.701598053 | -0.025845254 |
| 0.69024347 | -0.026333082 | 0.694798192 | -0.026139602 |
| 0.68334214 | -0.026621348 | 0.687998051 | -0.026427388 |
| 0.67644068 | -0.026906334 | 0.681197702 | -0.026710228 |
| 0.66953903 | -0.027186863 | 0.674397224 | -0.026989947 |
| 0.66263715 | -0.027461505 | 0.667596548 | -0.027264813 |
| 0.65573502 | -0.027729962 | 0.660795631 | -0.027533653 |
| 0.64883275 | -0.027994805 | 0.6539945 | -0.027797017 |
| 0.64193034 | -0.028255812 | 0.647193248 | -0.028057231 |
| 0.63502771 | -0.028510995 | 0.640391836 | -0.028313241 |
| 0.62812484 | -0.028759645 | 0.633590203 | -0.028563323 |
| 0.62122173 | -0.029001421 | 0.626788339 | -0.028807008 |
| 0.61431834 | -0.029235398 | 0.619986234 | -0.029043913 |
| 0.60741467 | -0.02946073 | 0.613183863 | -0.029273006 |
| 0.60051077 | -0.02967868 | 0.606381216 | -0.029493794 |
| 0.59360667 | -0.029890434 | 0.599578347 | -0.029707604 |
| 0.58670242 | -0.030097182 | 0.592775298 | -0.0299156 |
| 0.57979794 | -0.030296257 | 0.5859721 | -0.030118688 |
| 0.57289314 | -0.030483864 | 0.57916867 | -0.030313852 |
| 0.56598808 | -0.030661313 | 0.572364927 | -0.03049775 |
| 0.55908286 | -0.030832784 | 0.565560931 | -0.030672048 |
| 0.55217755 | -0.031000383 | 0.558756795 | -0.030840795 |
| 0.54527206 | -0.031160688 | 0.551952565 | -0.031005743 |
| 0.53836638 | -0.031312521 | 0.545148165 | -0.03116348 |
| 0.53146056 | -0.031457535 | 0.538343579 | -0.031313011 |
| 0.52455455 | -0.031593224 | 0.531538852 | -0.031455938 |
| 0.51764835 | -0.03171937 | 0.52473394 | -0.031589825 |
| 0.510742 | -0.031836384 | 0.517928853 | -0.031714422 |
| 0.50383548 | -0.031943495 | 0.511123609 | -0.031830168 |
| 0.49692881 | -0.032039745 | 0.504318209 | -0.031936351 |
| 0.490022 | -0.032126268 | 0.497512653 | -0.032032039 |
| 0.48311511 | -0.032205957 | 0.490706967 | -0.032117987 |
| 0.4762081 | -0.032273796 | 0.483901202 | -0.032197353 |
| 0.46930096 | -0.032327242 | 0.477095319 | -0.032265929 |
| 0.46239376 | -0.032371823 | 0.470289308 | -0.032320316 |
| 0.45548654 | -0.032412711 | 0.463483226 | -0.032365091 |
| 0.44857928 | -0.032447356 | 0.456677121 | -0.032405942 |
| 0.44167197 | -0.032471172 | 0.449870986 | -0.032441642 |
| 0.43476464 | -0.032485408 | 0.443064806 | -0.032467215 |
| 0.4278573 | -0.032490617 | 0.436258596 | -0.032483086 |
| 0.42094995 | -0.032487809 | 0.429452371 | -0.032490197 |
| 0.41404261 | -0.032477885 | 0.422646143 | -0.032489133 |

(suite)

| OA 312 initial | | OA 312 modifié | |
|---|---|---|---|
| u | v | u | v |
| 0.40713529 | -0.032459292 | 0.415839919 | -0.032481255 |
| 0.400228 | -0.032432138 | 0.40903371 | -0.032465258 |
| 0.39332074 | -0.032396333 | 0.402227525 | -0.032440931 |
| 0.38641353 | -0.032352989 | 0.395421376 | -0.03240799 |
| 0.37950639 | -0.03229981 | 0.388615266 | -0.032367826 |
| 0.37259931 | -0.032239735 | 0.381809217 | -0.032318475 |
| 0.36569231 | -0.032170758 | 0.375003228 | -0.032261403 |
| 0.35878542 | -0.03209116 | 0.368197303 | -0.03219708 |
| 0.35187862 | -0.032004481 | 0.361391487 | -0.032122196 |
| 0.34497191 | -0.031910779 | 0.354585764 | -0.032039251 |
| 0.33806528 | -0.031811182 | 0.347780125 | -0.031949679 |
| 0.33115874 | -0.031705226 | 0.340974572 | -0.031853825 |
| 0.32425232 | -0.031592553 | 0.334169101 | -0.031752274 |
| 0.31734598 | -0.031474775 | 0.327363733 | -0.031644051 |
| 0.31043975 | -0.0313505 | 0.320558458 | -0.031530134 |
| 0.30353372 | -0.031215712 | 0.313753268 | -0.031411284 |
| 0.29662781 | -0.031074903 | 0.306948237 | -0.031283611 |
| 0.28972193 | -0.030932258 | 0.300143383 | -0.031146822 |
| 0.28281621 | -0.030782557 | 0.293338582 | -0.031007455 |
| 0.27591065 | -0.030625583 | 0.286533862 | -0.030864197 |
| 0.26900525 | -0.030461628 | 0.279729308 | -0.030713192 |
| 0.26210003 | -0.030290046 | 0.272924904 | -0.030555618 |
| 0.25519503 | -0.030110199 | 0.266120671 | -0.030390859 |
| 0.24829025 | -0.029921872 | 0.259316619 | -0.030218702 |
| 0.24138582 | -0.02972115 | 0.252512799 | -0.030037765 |
| 0.23448204 | -0.029499344 | 0.245709168 | -0.02984953 |
| 0.22757795 | -0.029287343 | 0.2389061 | -0.029642347 |
| 0.22067396 | -0.029071792 | 0.232103344 | -0.029424966 |
| 0.2137702 | -0.028849395 | 0.225300281 | -0.029217381 |
| 0.20686666 | -0.02861994 | 0.218497451 | -0.029002322 |
| 0.19996326 | -0.028386759 | 0.211694821 | -0.02878103 |
| 0.19306012 | -0.028145708 | 0.20489239 | -0.028553712 |
| 0.18615717 | -0.0278991 | 0.1980901 | -0.028322196 |
| 0.17925445 | -0.027646379 | 0.191288083 | -0.028082795 |
| 0.17235203 | -0.027385671 | 0.184486235 | -0.027838658 |
| 0.16544986 | -0.027118338 | 0.177684636 | -0.027587677 |
| 0.15854801 | -0.026842676 | 0.170883306 | -0.027329498 |
| 0.15164628 | -0.026564226 | 0.164082254 | -0.02706411 |
| 0.14474506 | -0.026273412 | 0.157281464 | -0.026792042 |
| 0.13784413 | -0.025975833 | 0.150480843 | -0.02651589 |
| 0.13094412 | -0.02565757 | 0.143680696 | -0.026228166 |
| 0.12404474 | -0.025325923 | 0.136880887 | -0.02593271 |
| 0.11714637 | -0.024973975 | 0.130081991 | -0.025616805 |
| 0.11024893 | -0.024604117 | 0.123283702 | -0.025288199 |
| 0.10335269 | -0.024212558 | 0.11648642 | -0.024939313 |
| 0.09645803 | -0.023794076 | 0.109690041 | -0.024573293 |
| 0.08956534 | -0.023344476 | 0.102894859 | -0.024185659 |
| 0.08267502 | -0.022859797 | 0.096101239 | -0.023771588 |

(suite)

| OA 312 initial | | OA 312 modifié | |
|---|---|---|---|
| u | v | u | v |
| 0.07578807 | -0.022329426 | 0.089309534 | -0.023327169 |
| 0.06890528 | -0.021747557 | 0.082520166 | -0.022848405 |
| 0.06202816 | -0.021102161 | 0.075734086 | -0.022325075 |
| 0.05515825 | -0.020384111 | 0.06895205 | -0.021751715 |
| 0.04829807 | -0.019578361 | 0.062175509 | -0.021116713 |
| 0.04145067 | -0.018670616 | 0.055405911 | -0.020411465 |
| 0.03462209 | -0.017630536 | 0.048569015 | -0.01959531 |
| 0.02782328 | -0.016411105 | 0.041857093 | -0.018331146 |
| 0.02107598 | -0.01493538 | 0.035361778 | -0.016646922 |
| 0.01443014 | -0.013049858 | 0.02889838 | -0.014519503 |
| 0.00806224 | -0.010384561 | 0.022565134 | -0.011936864 |
| 0.0025131 | -0.006290967 | 0.016517841 | -0.008896071 |
| 0 | 0 | 0.010767086 | -0.005266414 |
| 0.00181962 | 0.006398846 | 0.005564092 | -0.000900209 |
| 0.00544734 | 0.011963855 | 0.001378576 | 0.004660301 |
| 0.0099923 | 0.016842324 | 0.0000531 | 0.011063518 |
| 0.01500132 | 0.021220512 | 0.002359147 | 0.017428969 |
| 0.02034035 | 0.025202719 | 0.006540217 | 0.022760138 |
| 0.02590894 | 0.028851295 | 0.011584271 | 0.027357699 |
| 0.03166044 | 0.032206505 | 0.017055197 | 0.031398858 |
| 0.03755644 | 0.0353001 | 0.022773637 | 0.035020099 |
| 0.04357001 | 0.038158629 | 0.028782261 | 0.038377771 |
| 0.04968097 | 0.040802626 | 0.034714585 | 0.041357472 |
| 0.05587318 | 0.043250297 | 0.04104269 | 0.044243616 |
| 0.06213457 | 0.045515176 | 0.04764504 | 0.046986069 |
| 0.06845575 | 0.047607406 | 0.053520572 | 0.049225586 |
| 0.07482821 | 0.049537826 | 0.060005457 | 0.051499484 |
| 0.08124387 | 0.0513195 | 0.066470409 | 0.053574728 |
| 0.08820416 | 0.053085968 | 0.072860138 | 0.055447169 |
| 0.09472631 | 0.054600391 | 0.079566418 | 0.057226152 |
| 0.10127513 | 0.05599533 | 0.086252972 | 0.058809723 |
| 0.10784577 | 0.057282031 | 0.092523495 | 0.06011674 |
| 0.1144356 | 0.058465575 | 0.099464645 | 0.061348393 |
| 0.1210419 | 0.05955505 | 0.106329761 | 0.062316521 |
| 0.12766218 | 0.060556505 | 0.112842766 | 0.062960094 |
| 0.1342944 | 0.061475689 | 0.119695822 | 0.063375175 |
| 0.14093683 | 0.062318761 | 0.126821535 | 0.064347542 |
| 0.14758792 | 0.063090357 | 0.133449162 | 0.064858948 |
| 0.15424625 | 0.063795598 | 0.140359805 | 0.065210542 |
| 0.16091073 | 0.064438634 | 0.147078544 | 0.065470225 |
| 0.1675805 | 0.065023344 | 0.15394452 | 0.065690149 |
| 0.17425476 | 0.065553844 | 0.160832609 | 0.065885435 |
| 0.18093267 | 0.066033711 | 0.167666831 | 0.066068107 |
| 0.18761362 | 0.066465745 | 0.174390994 | 0.066248131 |
| 0.19429713 | 0.066853751 | 0.180963426 | 0.066434585 |
| 0.20098285 | 0.067200779 | 0.187892045 | 0.066654887 |
| 0.20767042 | 0.067509754 | 0.194484137 | 0.066902299 |
| 0.21435948 | 0.067783934 | 0.20136219 | 0.067219293 |

(suite)

| OA 312 initial | | OA 312 modifié | |
|---|---|---|---|
| u | v | u | v |
| 0.22104988 | 0.068025716 | 0.208161319 | 0.067531027 |
| 0.22774153 | 0.068237501 | 0.214961994 | 0.067807003 |
| 0.23443446 | 0.068421675 | 0.221763937 | 0.068049706 |
| 0.24112875 | 0.068580606 | 0.228566908 | 0.068261654 |
| 0.24782458 | 0.068715389 | 0.2353707 | 0.068445387 |
| 0.25452205 | 0.068827692 | 0.242175141 | 0.068603235 |
| 0.26122116 | 0.068919377 | 0.248980113 | 0.068736314 |
| 0.26792178 | 0.068991911 | 0.255785492 | 0.068846514 |
| 0.27462369 | 0.069046512 | 0.26259118 | 0.068935722 |
| 0.28132662 | 0.069084122 | 0.269397095 | 0.069005436 |
| 0.28803028 | 0.069105593 | 0.276203173 | 0.069056868 |
| 0.29473438 | 0.06911129 | 0.283009359 | 0.069091011 |
| 0.30143866 | 0.069102085 | 0.289815609 | 0.06910863 |
| 0.30814267 | 0.069079057 | 0.296621881 | 0.069110154 |
| 0.31484591 | 0.069042581 | 0.303428139 | 0.069096657 |
| 0.32154803 | 0.068992395 | 0.310234356 | 0.06906913 |
| 0.32824871 | 0.068929257 | 0.317040502 | 0.06902766 |
| 0.3349476 | 0.068854513 | 0.323846547 | 0.068972103 |
| 0.34164434 | 0.068767354 | 0.330652477 | 0.068903782 |
| 0.3483387 | 0.06866752 | 0.337458273 | 0.068823343 |
| 0.35503065 | 0.068555537 | 0.344263902 | 0.068729778 |
| 0.36172032 | 0.068431861 | 0.351069341 | 0.06862326 |
| 0.36840796 | 0.068295895 | 0.357874575 | 0.068504395 |
| 0.37509386 | 0.068146673 | 0.364679585 | 0.068373299 |
| 0.38177833 | 0.06798472 | 0.371484324 | 0.068228876 |
| 0.38846165 | 0.067809991 | 0.378288761 | 0.068070824 |
| 0.39514412 | 0.067621504 | 0.385092882 | 0.067899724 |
| 0.40182598 | 0.067419068 | 0.391896644 | 0.06771487 |
| 0.40850748 | 0.067203368 | 0.398699995 | 0.067515467 |
| 0.41518876 | 0.066974178 | 0.405502918 | 0.067301989 |
| 0.42186994 | 0.066730788 | 0.412305398 | 0.067074804 |
| 0.42855111 | 0.066473508 | 0.419107378 | 0.066833144 |
| 0.43523236 | 0.066202444 | 0.425908825 | 0.066576891 |
| 0.44191368 | 0.065917206 | 0.432709721 | 0.066306435 |
| 0.44859506 | 0.065617651 | 0.439510025 | 0.066021467 |
| 0.45527644 | 0.065303594 | 0.446309695 | 0.065721734 |
| 0.46195772 | 0.064974867 | 0.45310869 | 0.06540709 |
| 0.46863881 | 0.064631277 | 0.459906969 | 0.065077335 |
| 0.47531964 | 0.064272451 | 0.466704491 | 0.064732303 |
| 0.4820001 | 0.063897928 | 0.473501201 | 0.064371654 |
| 0.4886801 | 0.063507243 | 0.480297039 | 0.063994929 |
| 0.49535956 | 0.063100338 | 0.487091937 | 0.063601606 |
| 0.50203842 | 0.062677149 | 0.493885843 | 0.063191506 |
| 0.50871661 | 0.062237069 | 0.500678717 | 0.062764654 |
| 0.51539408 | 0.061779608 | 0.507470482 | 0.062320496 |
| 0.52207074 | 0.061304328 | 0.514261055 | 0.061858479 |
| 0.52874655 | 0.060810988 | 0.521050355 | 0.061378131 |
| 0.53542139 | 0.0602992 | 0.527838315 | 0.060879186 |

(suite)

| OA 312 initial | | OA 312 modifié | |
|---|---|---|---|
| u | v | u | v |
| 0.5420952 | 0.059768836 | 0.534624852 | 0.060361255 |
| 0.54876793 | 0.059219921 | 0.541409899 | 0.059824155 |
| 0.55543953 | 0.058652464 | 0.548193404 | 0.059267917 |
| 0.56210994 | 0.058066592 | 0.554975313 | 0.058692549 |
| 0.56877914 | 0.05746262 | 0.561755584 | 0.058098178 |
| 0.5754471 | 0.056841088 | 0.56853419 | 0.057485118 |
| 0.58211376 | 0.056202066 | 0.575311132 | 0.056853938 |
| 0.58877904 | 0.055545681 | 0.582086371 | 0.056204727 |
| 0.59544292 | 0.054872031 | 0.588859871 | 0.055537614 |
| 0.60210535 | 0.054181448 | 0.595631595 | 0.054852706 |
| 0.60876634 | 0.053474508 | 0.602401532 | 0.054150359 |
| 0.61542589 | 0.052751624 | 0.609169702 | 0.05343118 |
| 0.62208393 | 0.052012809 | 0.615936106 | 0.052695577 |
| 0.62874038 | 0.051258157 | 0.622700706 | 0.051943555 |
| 0.63539517 | 0.050487757 | 0.629463471 | 0.051175219 |
| 0.6420482 | 0.049701608 | 0.636224373 | 0.050390649 |
| 0.64869935 | 0.048899517 | 0.642983367 | 0.049589813 |
| 0.65534853 | 0.048081384 | 0.649740389 | 0.048772502 |
| 0.66199564 | 0.047247258 | 0.656495386 | 0.047938621 |
| 0.66864067 | 0.046397534 | 0.66324833 | 0.047088273 |
| 0.67528354 | 0.04553245 | 0.669999234 | 0.046221885 |
| 0.68192413 | 0.044651761 | 0.67674808 | 0.045339604 |
| 0.6885623 | 0.043755044 | 0.683494782 | 0.044441075 |
| 0.69519797 | 0.042842331 | 0.690239249 | 0.043525919 |
| 0.70183108 | 0.041913861 | 0.696981456 | 0.042594262 |
| 0.70846161 | 0.040969798 | 0.703721395 | 0.041646337 |
| 0.71508952 | 0.040010167 | 0.710459045 | 0.040682281 |
| 0.72171476 | 0.03903488 | 0.717194363 | 0.039702055 |
| 0.72833734 | 0.03804412 | 0.723927302 | 0.038705626 |
| 0.73495729 | 0.03703822 | 0.730657864 | 0.037693268 |
| 0.74157466 | 0.036017529 | 0.737386067 | 0.03666534 |
| 0.74818951 | 0.034982406 | 0.74411193 | 0.035622217 |
| 0.75480194 | 0.033933266 | 0.75083548 | 0.034564292 |
| 0.76141204 | 0.032870639 | 0.757556764 | 0.033492056 |
| 0.76801992 | 0.031795061 | 0.764275844 | 0.032406096 |
| 0.7746257 | 0.030707078 | 0.770992781 | 0.031306963 |
| 0.7812295 | 0.02960726 | 0.777707655 | 0.030195292 |
| 0.78783144 | 0.028496234 | 0.784420527 | 0.0290716 |
| 0.7944318 | 0.027375452 | 0.791131569 | 0.027937026 |
| 0.8010308 | 0.026246084 | 0.797841006 | 0.026792999 |
| 0.80762873 | 0.025109633 | 0.804549062 | 0.025640905 |
| 0.81422581 | 0.023967208 | 0.811255979 | 0.024482195 |
| 0.82082216 | 0.022819453 | 0.817961912 | 0.023317802 |
| 0.82741775 | 0.021666048 | 0.824666879 | 0.022147866 |
| 0.83401224 | 0.020505137 | 0.831370693 | 0.020971335 |
| 0.84060522 | 0.019334206 | 0.838072796 | 0.019785103 |
| 0.84719715 | 0.018155984 | 0.844773294 | 0.018589833 |
| 0.85378858 | 0.016973462 | 0.851472851 | 0.017389301 |

(suite)

| OA 312 initial | | OA 312 modifié | |
|---|---|---|---|
| u | v | u | v |
| 0.86037999 | 0.015789273 | 0.858171878 | 0.016185812 |
| 0.86697275 | 0.014610967 | 0.864871417 | 0.01498518 |
| 0.87356846 | 0.013447686 | 0.871573299 | 0.013797696 |
| 0.88016746 | 0.012301411 | 0.878278267 | 0.012627762 |
| 0.88677005 | 0.011174321 | 0.88498646 | 0.011476467 |
| 0.89337721 | 0.010072607 | 0.891698822 | 0.010349729 |
| 0.89998963 | 0.009001145 | 0.898416142 | 0.009252936 |
| 0.90660819 | 0.007966609 | 0.905139321 | 0.008192654 |
| 0.91323313 | 0.006971915 | 0.911868861 | 0.007173523 |
| 0.91986412 | 0.006016725 | 0.918604395 | 0.006194794 |
| 0.9265021 | 0.005109616 | 0.925346654 | 0.005263502 |
| 0.93314744 | 0.004256482 | 0.932096381 | 0.004388012 |
| 0.93979955 | 0.003456187 | 0.938852854 | 0.003566159 |
| 0.9464605 | 0.002731504 | 0.945617863 | 0.002817862 |
| 0.95313218 | 0.002112785 | 0.952393717 | 0.002175116 |
| 0.95981507 | 0.001629311 | 0.959181102 | 0.0016685 |
| 0.96650801 | 0.001311121 | 0.965978931 | 0.001329665 |
| 0.97320705 | 0.0011756 | 0.972783523 | 0.001178862 |
| 0.97990765 | 0.001209616 | 0.979589744 | 0.001204674 |
| 0.98660648 | 0.001368188 | 0.986394194 | 0.001361998 |
| 0.99330405 | 0.001577422 | 0.993197164 | 0.001574008 |
| 1 | 0.001786945 | 1 | 0.001786945 |

La présente description divulgue aussi un rotor destiné à un aéronef, ce rotor comportant au moins deux pales améliorées telles que précédemment décrites, ces pales améliorées étant définies par les profils aérodynamiques modifiés par les étapes de la méthode d'amélioration d'une pale. Ce rotor est par exemple une hélice d'avancement d'un aéronef et en particulier une seconde hélice d'avancement d'un hélicoptère hybride, cette seconde hélice d'avancement fournissant une force aérodynamique vers l'avant de l'hélicoptère hybride lors des vols d'avancement et une force aérodynamique vers l'arrière lors des vols stationnaires.

La présente description divulgue aussi un aéronef à voilure tournante comportant un fuselage, au moins un rotor principal et au moins deux hélices d'avancement. Au moins une des hélices d'avancement de l'aéronef est un rotor tel que précédemment décrit et comporte au moins deux pales améliorée définies par des profils aérodynamiques modifiés par la méthode d'amélioration d'une pale précédemment décrite.

L'invention et ses avantages apparaîtront avec plus de détails dans le cadre de la description qui suit avec des exemples de réalisation donnés à titre illustratif en référence aux figures annexées qui représentent :

- les figures 1 et 2, un hélicoptère hybride,
- la figure 3, une pale,
- la figure 4, un schéma synoptique d'une méthode d'amélioration d'une pale,
- la figure 5, un schéma de construction d'un cercle initial de bord d'attaque d'un demi-profil,
- les figures 6 à 9, trois profils aérodynamiques modifiés d'une pale,
- la figure 10, des courbes de variation du coefficient de portance de la pale en fonction de son incidence,
- la figure 11, des courbes indiquant les évolutions des caractéristiques des modifications d'un profil aérodynamique en fonction de son épaisseur relative, et
- la figure 12, deux courbes reliant la poussée $F$ et la puissance $P$ consommée d'une pale.

Les éléments présents dans plusieurs figures distinctes sont affectés d'une seule et même référence.

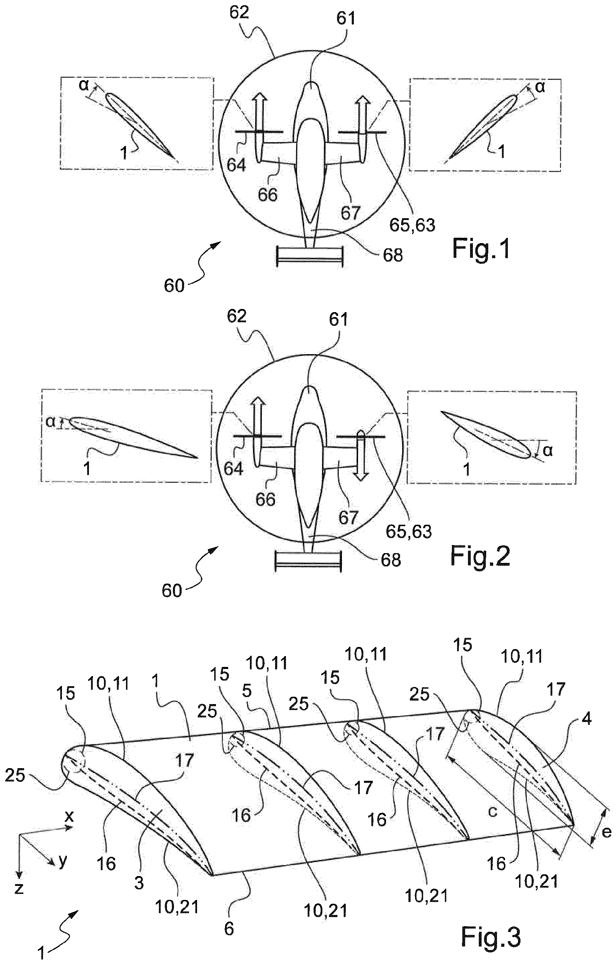

Les figures 1 et 2 représentent un même hélicoptère hybride 60 en vue de dessus ainsi que des vues de détail d'une pale 1 de chaque hélice d'avancement 64,65 de l'hélicoptère hybride 60. Sur la figure 1, l'hélicoptère hybride 60 est en vol d'avancement alors que sur la figure 2, l'hélicoptère hybride 60 est en vol stationnaire.

L'hélicoptère hybride 60 est un aéronef à voilure tournante comportant un fuselage 61, un rotor principal 62, deux demi-ailes 66,67 agencées de part et d'autre du fuselage 61, une poutre de queue 68 et deux hélices d'avancement 64,65. Les deux hélices d'avancement 64,65 sont positionnées de part et d'autre du fuselage 61, respectivement à l'extrémité d'une demi-aile 66,67.

Une pale 1 est représentée sur la figure 3, cette pale 1 pouvant équiper le rotor principal 62 ou bien une hélice d'avancement 64,65. Un repère (X,Y,Z) est représenté sur la figure 3 et formé par une direction longitudinale X, une direction transversale Y et une direction verticale Z, ces trois directions étant perpendiculaires entre elles. La direction longitudinale X est sensiblement parallèle à un axe de variation de pas de la pale 1, voire confondue avec lui.

La pale 1 s'étend selon la direction longitudinale X en envergure d'une première extrémité 3 à une seconde extrémité 4 et selon la direction transversale Y d'un bord d'attaque 5 vers un bord de fuite 6. La pale 1 comporte des sections transversales successives dans un plan transversal parallèle aux directions transversale Y et verticale Z, chaque section transversale étant définie par un profil aérodynamique 10 comportant notamment deux demi-profils 11,21, à savoir un demi-profil d'extrados 11 et un demi-profil d'intrados 21. Le demi-profil d'extrados 11 et le demi-profil d'intrados 21 comportent respectivement un tronçon de bord d'attaque 12,22 débutant au bord d'attaque 5, un tronçon terminal 14,24 se terminant au bord de fuite 6 et un tronçon intermédiaire 13,23 situé entre le tronçon de bord d'attaque 12,22 et le tronçon terminal 14,24. Les tronçons de bord d'attaque 12,24 du demi-profil d'extrados 11 et du demi-profil d'intrados 21 sont formés respectivement par une portion d'un cercle initial de bord d'attaque 15,25.

Les profils aérodynamiques 10 de ces sections transversales évoluent généralement selon leur position en envergure sur la pale 1 et peuvent donc être différents afin notamment d'être adaptés à l'écoulement d'air reçu par chaque section transversale lors de la rotation de la pale 1.

Sur la figure 3 est également représentée une ligne de demi-épaisseur ou « ligne moyenne » 17 du profil aérodynamique 10. Cette ligne moyenne 17 est équidistante des demi-profils d'intrados 21 et d'extrados 11 perpendiculairement à la ligne moyenne 17. On constate que les profils aérodynamiques 10 de la pale 1 sont asymétriques et comportent une cambrure, cette ligne moyenne 17 étant courbe. Un segment de droite 16 reliant le bord d'attaque 5 et le bord de fuite 6 est également représenté sur la figure 3 pour plusieurs profils aérodynamiques 10. Ce segment de droite 16 correspond à la corde du profil aérodynamique 10.

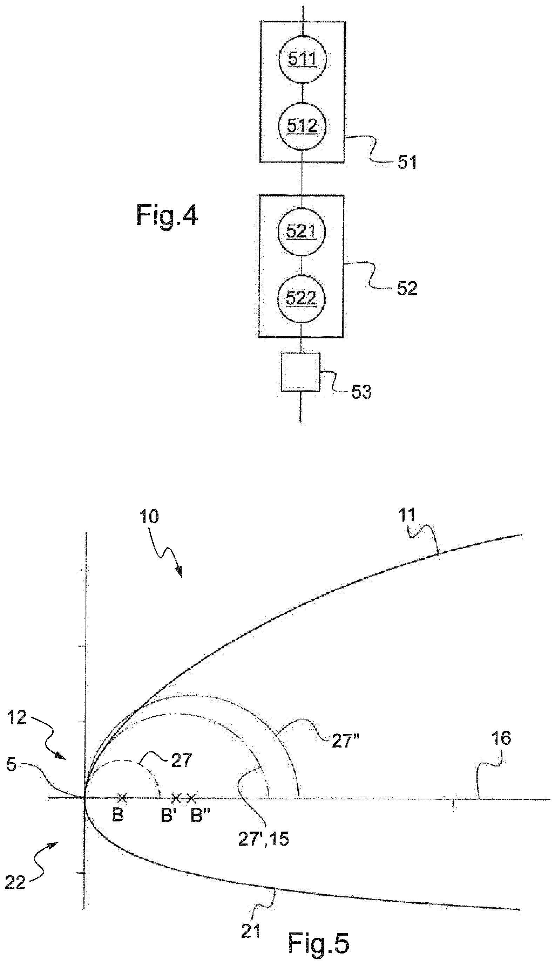

La figure 4 représente le schéma synoptique d'une méthode d'amélioration d'une pale initiale pour constituer une pale modifiée dite « pale améliorée », cette méthode comprenant plusieurs étapes. Cette méthode est destinée à être appliquée à des pales dont les sections transversales successives sont formées par des profils aérodynamiques existants, par exemple selon les familles *NACA* ou bien les familles *OA.*

Cette méthode d'amélioration d'une pale 1 est particulièrement destinée à des profils aérodynamiques 10 dont les tronçons de bord d'attaque 12,22 des demi-profils 11,21 sont définis par une portion d'un cercle initial de bord d'attaque 15,25 comme représenté sur la figure 3. Chaque cercle initial de bord d'attaque 15,25 d'un demi-profil 11,21 est alors caractérisé par son rayon et la position de son centre. Pour chaque profil aérodynamique 10, le cercle initial de bord d'attaque 15 du demi-profil d'extrados 11 et le cercle initial de bord d'attaque 25 du demi-profil d'intrados 21 ont leurs centres confondus et leurs rayons égaux.

Cependant, cette méthode d'amélioration d'une pale 1 peut également être appliquée à des profils aérodynamiques 10 dont les tronçons de bord d'attaque 12,22 des demi-profils 11,21 ne sont pas des portions de cercles, un cercle initial de bord d'attaque 15,25 étant alors préalablement estimé pour chaque demi-profil 11,21 de chaque profil aérodynamique 10. Ce cercle initial de bord d'attaque 15,25 d'un demi-profil peut être déterminé par une méthode adaptée dont une construction géométrique est représentée sur la figure 5 pour le demi-profil d'extrados 11.

Cette méthode d'amélioration d'une pale 1 comporte alors une étape préliminaire de détermination d'un cercle initial de bord d'attaque 15,25 d'au moins un demi-profil 11,21 de chaque profil aérodynamique 10, ce cercle initial de bord d'attaque 15,25 étant estimé à partir du tronçon de bord d'attaque 12,22 du demi-profil 11,21.

Lors de cette étape préliminaire, un cercle initial de bord d'attaque 15 du demi-profil d'extrados 11 et un cercle initial de bord d'attaque 25 du demi-profil d'intrados 21 peuvent être estimés respectivement à partir des tronçons de bord d'attaque 12,22 du demi-profil d'extrados 11 et du demi-profil d'intrados 22.

Cette étape préliminaire de détermination d'un cercle initial de bord d'attaque 15,25 est appliquée au demi-profil d'extrados 11 d'un profil aérodynamique 10 sur la figure 5. Tout d'abord, un segment de droite 16 reliant le bord d'attaque 5 au bord de fuite 6 du profil aérodynamique 10 est défini, ce segment de droite 16 correspondant à la corde du profil aérodynamique 10.

Ensuite, un cercle de construction 27 est créé, ce cercle de construction 27 passant par le bord d'attaque 5, le centre *B* de ce cercle de construction 27 étant situé sur le segment de droite 16. De plus, le cercle de construction 27 est inscrit dans le demi-profil d'extrados 11. Le cercle de construction 27 peut également être tangent au tronçon de bord d'attaque 12 du demi-profil d'extrados 11 dans le cas particulier où la direction de tangence du tronçon de bord d'attaque 12 au niveau du bord d'attaque 5 est perpendiculaire au segment de droite 16.

Par la suite, le rayon du cercle de construction 27 est augmenté, le centre *B* du cercle de construction 27 étant alors déplacé sur le segment de droite 16 et le cercle de construction passant par le bord d'attaque 5. Le rayon du cercle de construction 27 est ainsi augmenté jusqu'à ce que le cercle de construction 27 soit sécant avec le demi-profil d'extrados 11. Le cercle de construction 27" de centre *B*" représente le premier cercle de construction 27 sécant avec le tronçon de bord d'attaque 12.

Enfin, le cercle initial de bord d'attaque 15 du demi-profil d'extrados 11 est déterminé par le plus grand cercle de construction 27' inscrit à l'intérieur du demi-profil d'extrados 11. Le centre du cercle initial de bord d'attaque 15 est le centre B' de ce plus grand cercle de construction 27' et est situé sur le segment de droite 16. Le rayon du cercle initial de bord d'attaque 15 est le rayon de ce plus grand cercle de construction 27'. Le plus grand cercle de construction 27' correspond en fait au cercle de construction 27 défini par l'itération précédant le cercle de construction 27" qui est le premier cercle de construction 27 sécant avec le tronçon de bord d'attaque 12, correspondant également au premier cercle de construction 27 qui n'est pas inscrit à l'intérieur du demi-profil d'extrados 11.

Cette étape préliminaire de détermination d'un cercle initial de bord d'attaque 15,25 d'au moins un demi-profil 11,21 peut également être appliquée au demi-profil d'intrados 21 des profils aérodynamiques 10 d'une pale 1. Cette étape préliminaire peut aussi être appliquée simultanément au demi-profil d'extrados 11 et au demi-profil d'intrados 21 des profils aérodynamiques 10 d'une pale 1.

Le cercle initial de bord d'attaque 15,25 peut ainsi être défini par un centre situé sur le segment de droite 16 et par un rayon. Ce cercle initial de bord d'attaque 15,25 permet ainsi de caractériser le tronçon de bord d'attaque 12,22 d'un demi-profil 11,21 d'un profil aérodynamique 10 d'une pale 1, une portion de ce cercle initial de bord d'attaque 15,25 remplaçant le tronçon de bord d'attaque 12,22 du demi-profil d'extrados 11.

Cette méthode d'amélioration d'une pale 1 comporte ensuite une première étape 51 de modification d'au moins un demi-profil 11,21 de chaque profil aérodynamique 10 de la pale 1.

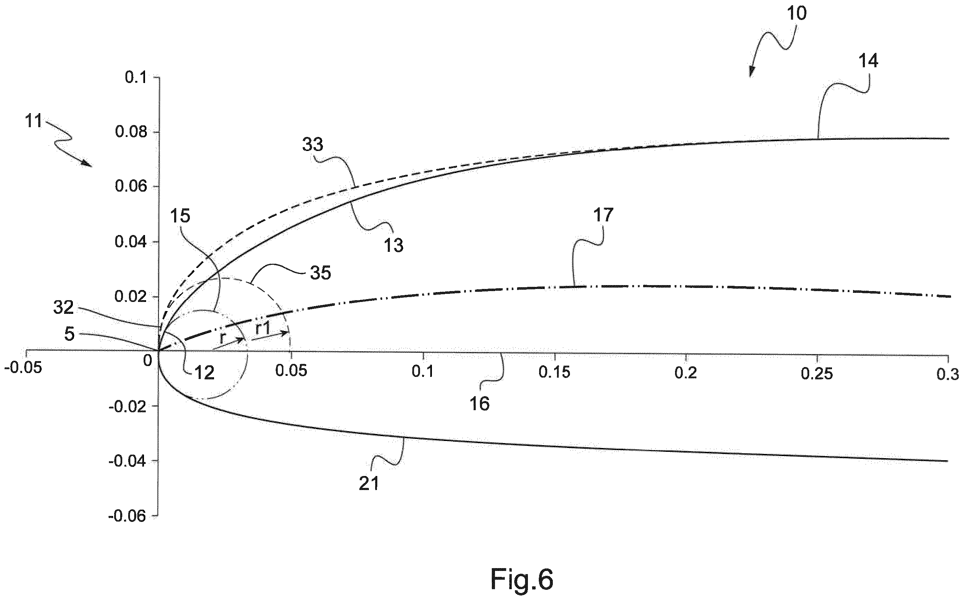

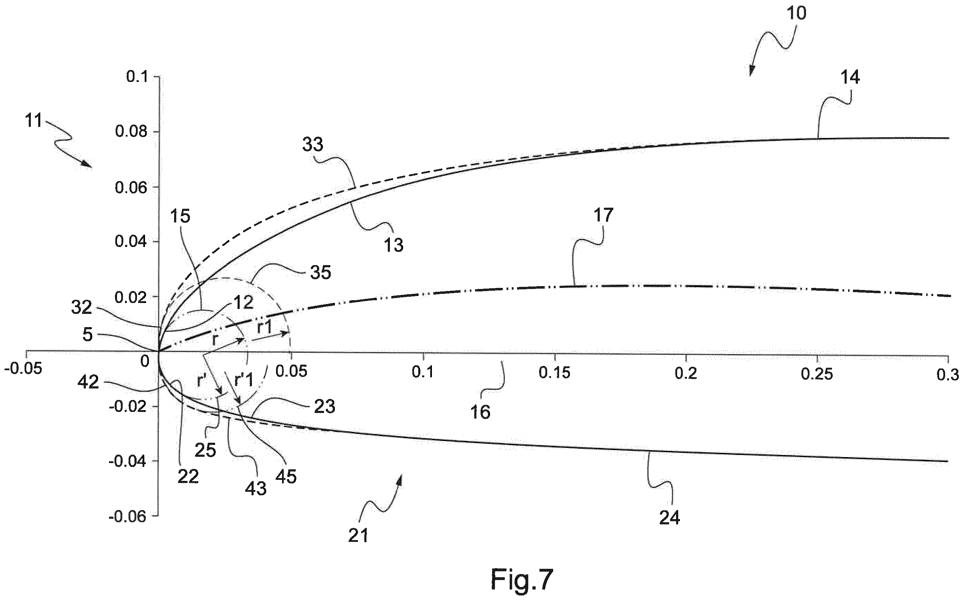

Une telle modification d'un demi-profil d'extrados 11 est représentée sur les figures 6 et 7. Selon la figure 6, seul le demi-profil d'extrados 11 est modifié alors que selon la figure 7, le demi-profil d'extrados 11 et le demi-profil d'intrados 21 sont modifiés, le cercle initial de bord d'attaque 15 du demi-profil d'extrados 11 et le cercle initial de bord d'attaque 25 du demi-profil d'intrados 21 étant identiques et confondus.

Selon cette première étape 51, le cercle initial de bord d'attaque 15,25 d'un demi-profil 11,21 est modifié pour chaque profil aérodynamique 10 de la pale 1 en augmentant son rayon *r*, la position du bord d'attaque 5 étant inchangée. Dès lors, un nouveau cercle de bord d'attaque 35,45 est défini par un nouveau rayon $r_1$ et un centre déplacé vers le bord de fuite 6. Un nouveau tronçon de bord d'attaque 32,42 du demi-profil 11,21 est alors constitué par une portion de ce nouveau cercle de bord d'attaque 35,45.

Une application de cette première étape 51 est de modifier le demi-profil d'extrados 11 d'un profil aérodynamique 10 comme représenté sur la figure 6. Cette première étape 51 comporte plusieurs sous-étapes suivantes 511-512.

Au cours d'une première sous-étape 511, le rayon du cercle initial de bord d'attaque 15 de ce demi-profil d'extrados 11 est augmenté et son centre est déplacé afin de former un nouveau cercle de bord d'attaque 35 de ce demi-profil d'extrados 11. Le nouveau cercle de bord d'attaque 35 est tangent au cercle initial de bord d'attaque 15 de ce demi-profil d'extrados 11 au niveau dut bord d'attaque 5 du profil aérodynamique 10. Une portion de ce nouveau cercle de bord d'attaque 35 constitue alors un nouveau tronçon de bord d'attaque 32 de ce demi-profil d'extrados 11.

Au cours d'une deuxième sous-étape 512, un nouveau tronçon intermédiaire 33 de ce demi-profil d'extrados 11 est défini afin de remplacer le tronçon intermédiaire 13 initial et raccorder le nouveau cercle de bord d'attaque 35 au tronçon terminal 14 de ce demi-profil d'extrados 11.

Ce nouveau tronçon intermédiaire 33 relie de façon tangentielle le nouveau tronçon de bord d'attaque 32 au tronçon terminal 14 qui est inchangé, le nouveau tronçon de bord d'attaque 32 passant par le bord d'attaque 5 et est tangent au cercle initial de bord d'attaque 15 au niveau du bord d'attaque 5. Le nouveau tronçon intermédiaire 33 ne doit comporter aucun point d'inflexion et a une tangence évoluant de façon continue.

Cette première étape 51 peut également être appliquée afin de modifier le demi-profil d'intrados 21 d'un profil aérodynamique 10. Cette première étape 51 peut aussi être appliquée afin de modifier le demi-profil d'extrados 11 et le demi-profil d'intrados 11 d'un profil aérodynamique 10. Une telle modification d'un demi-profil d'extrados 11 et d'un demi-profil d'intrados 21 est représentée sur la figure 7, le cercle initial de bord d'attaque 15 du demi-profil d'extrados 11 et le cercle initial de bord d'attaque 25 du demi-profil d'intrados 21 étant identiques, et confondus. Au cours de cette première étape 51, le cercle initial de bord d'attaque 15 du demi-profil d'extrados 11 et le cercle initial de bord d'attaque 14 du demi-profil d'intrados 21 sont modifiés de façon différentes, le nouveau cercle initial de bord d'attaque 35 du demi-profil d'extrados 11 et le nouveau cercle initial de bord d'attaque 45 du demi-profil d'intrados 21 étant différents.

Suite à cette modification d'au moins un demi-profil 11,21 de chaque profil aérodynamique 10 de la pale 1, l'écoulement d'air sur les demi-profils 11,21 de la pale 1 est modifié et provoque une diminution, en valeur algébrique, des incidences positive $\alpha_{dp}$ et négative $\alpha_{dn}$ de décrochage de la pale 1. En conséquence, les performances aérodynamiques de la pale 1 modifiée sont améliorées sous des incidences $\alpha$ négatives sans dégradation de ses performances aérodynamiques sous des incidences $\alpha$ positives, la zone d'utilisation de la pale 1 sous incidences $\alpha$ positives restant inférieures à l'incidence positive $\alpha_{dp}$ de décrochage de la pale 1 modifiée.

La pale 1 ainsi modifiée est alors optimisée pour équiper un rotor 63 susceptible de fournir une force aérodynamique dans deux directions opposées, respectivement sous une incidence positive et une incidence négative. Ce rotor 63 peut par exemple constituer une des deux hélices d'avancement 64,65 de l'hélicoptère hybride 60 représenté sur les figures 1 et 2.

En effet, lors d'un vol d'avancement représenté sur la figure 1, les deux hélices d'avancement 64,65 de l'hélicoptère hybride 60 fournissent des forces aérodynamiques sensiblement identiques et dirigées vers l'avant de l'hélicoptère hybride 60. Les pales 1 de ces hélices d'avancement 64,65 ont des incidences $\alpha$ positives comme représenté sur la figure 1.

A contrario, lors d'un vol stationnaire représenté sur la figure 2, les deux hélices d'avancement 64,65 fournissent des forces aérodynamiques opposées, une première hélice d'avancement 64 agencée à gauche du fuselage 61 fournissant une force aérodynamique dirigée vers l'avant de l'hélicoptère hybride 60 alors qu'une seconde hélice d'avancement 65 agencée à droite du fuselage 61 fournit une force aérodynamique dirigée vers l'arrière de l'hélicoptère hybride 60. Les pales 1 de la première hélice d'avancement 64 ont une incidence $\alpha$ positive comme représenté sur la figure 2 alors que les pales 1 de la seconde hélice d'avancement 65 ont une incidence $\alpha$ négative.

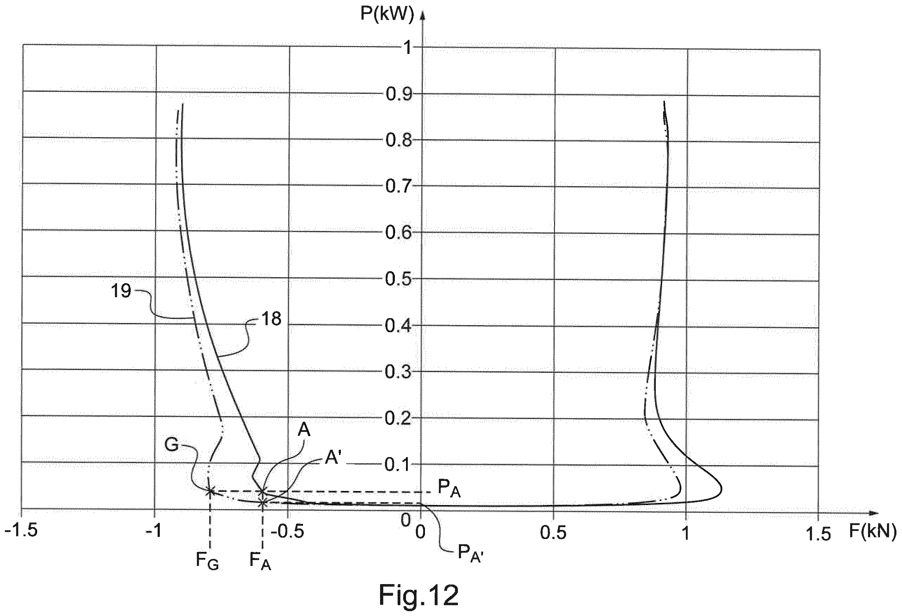

Chaque pale 1 modifiée équipant la seconde hélice d'avancement 65 lui permet ainsi de fournir la force aérodynamique F nécessaire à un vol stationnaire sous une incidence $\alpha$ négative qui est plus éloignée de l'incidence négative $\alpha_{dn}$ de décrochage de la pale 1 modifiée que pour une pale non modifiée. Cela s'accompagne d'une puissance nécessaire à l'entraînement en rotation de la seconde hélice d'avancement 65 qui peut être réduite par rapport à une hélice d'avancement ayant des pales 1 non modifiées, comme représenté sur la figure 12 afin de fournir cette force aérodynamique F nécessaire à un vol stationnaire sous une incidence $\alpha$ négative. La figure 12 représente deux courbes 18,19 reliant la force aérodynamique F d'une pale 1, en abscisse, avec la puissance P consommée par cette pale 1, en ordonnée. Une première courbe 18 correspond à une pale 1 non modifiée et une seconde courbe 19 correspond à une pale 1 modifiée.

On constate par exemple que, pour une même puissance consommée $P_A$ par la pale 1, un point A de la première courbe 18 correspond à une première force aérodynamique $F_A$ inférieure à une seconde force aérodynamique $F_G$ correspondant au point G de la seconde courbe 19.

On constate également que, pour une même force aérodynamique $F_A$ générée au niveau d'une pale, la pale 1 avec les profils aérodynamiques 10 modifiés consommera une puissance $P_{A'}$ correspond à un point A' de la seconde courbe 19 qui est inférieure à la puissance $P_A$ consommée par une pale 1 avec les profils aérodynamiques 10 non modifiés correspond au point A de la première courbe 18.

Lors de l'application de cette première étape 51, l'épaisseur e du profil aérodynamique 10 est inchangée pour chaque profil aérodynamique 10 de la pale 1 alors que sa corde c peut être légèrement modifiée. De plus, le nouveau tronçon intermédiaire 33,43 d'un demi-profil 11,21 débute respectivement sur le nouveau cercle de bord d'attaque 35,45 de ce demi-profil 11,21 à une première distance transversale minimale du bord d'attaque comprise entre 0.5% et 5% de la corde c du profil aérodynamique 10. Le nouveau tronçon intermédiaire 33,43 d'un demi-profil 11,21 se raccorde respectivement au tronçon terminal 14,24 de ce demi-profil 11,21 à une deuxième distance transversale du bord d'attaque 5 inférieure ou égale à 25% de la corde c.

Une modification des profils aérodynamiques 10 d'une pale 1 selon cette première étape 51 suffit à améliorer les performances aérodynamiques de la pale 1. Cependant, la méthode d'amélioration d'une pale 1 peut aussi comporter une deuxième étape 52 de déplacement du bord d'attaque 5 pour chaque profil aérodynamique 10 de la pale 1. Selon cette deuxième étape 52, le bord d'attaque 5 de chaque profil aérodynamique 10 de la pale 1 est déplacé du demi-profil d'intrados 21 vers le demi-profil d'extrados 11 d'une troisième distance d, perpendiculairement au segment de droite 16, les demi-profils d'extrados 11 et d'intrados 21 étant modifiés en conséquence. Cette deuxième étape 52 comporte deux sous-étapes 521,522.

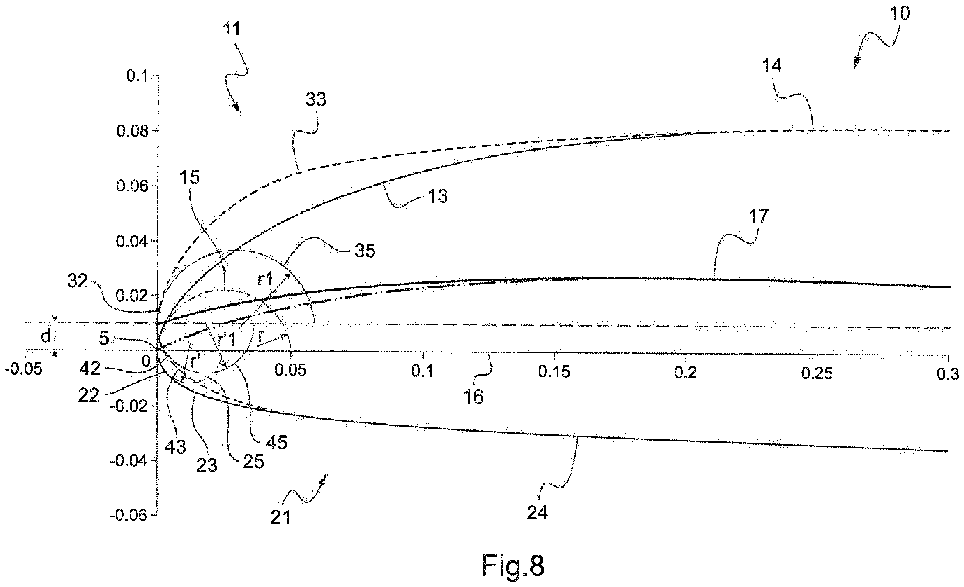

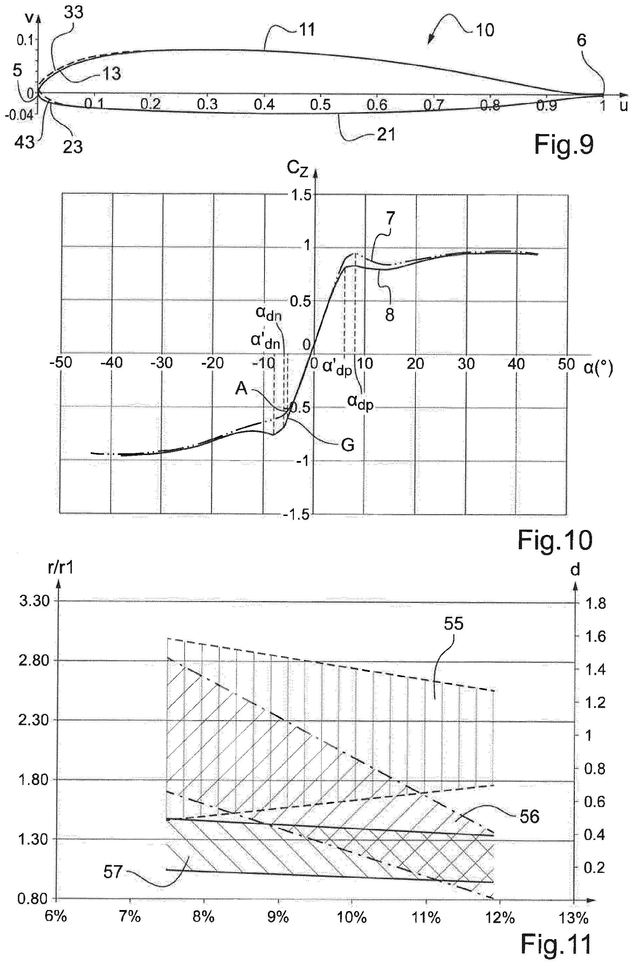

Selon les figures 8 et 9, ce déplacement du bord d'attaque 5 du profil aérodynamique 10 fait suite à l'augmentation des rayons des cercles initiaux de bord d'attaque 15,25 du demi-profil d'extrados 11 et du demi-profil d'intrados 21 du profil aérodynamique 10. Toutefois, ce déplacement du bord d'attaque 5 peut être fait suite à une modification préalable d'un seul des deux demi-profils 11,21. La figure 9 représente le profil aérodynamique 10 dans sa totalité alors que la figure 8 représente uniquement une zone de ce profil aérodynamique 10 à proximité du bord d'attaque 5 comme pour les figures 6 et 7. On peut constater sur la figure 8 que les cercles initiaux de bord d'attaque 15,25 du demi-profil d'extrados 11 et du demi-profil d'intrados 21 du profil aérodynamique 10 sont de rayons et de centres différents.

Au cours d'une première sous-étape 521, le bord d'attaque 5 du profil aérodynamique 10 est déplacé de la troisième distance d perpendiculairement au segment de droite 16, du demi-profil d'intrados 21 vers le demi-profil d'extrados 11. Le nouveau tronçon de bord d'attaque 32 du demi-profil d'extrados 11 est également déplacé, de même que le nouveau tronçon de bord d'attaque 42 du demi-profil d'intrados 21.

Au cours d'une deuxième sous-étape 522, un nouveau tronçon intermédiaire 33 attaché au demi-profil d'extrados 11 et un nouveau tronçon intermédiaire 43 attaché au demi-profil d'intrados 21 sont définis. Le nouveau tronçon intermédiaire 33 attaché au demi-profil d'extrados 11 raccorde le nouveau tronçon de bord d'attaque 32 de ce demi-profil d'extrados 11déplacé au tronçon terminal d'extrados 14 de ce demi-profil d'extrados 11, le tronçon terminal 14 étant inchangé. De même, le nouveau tronçon intermédiaire 43 attaché au demi-profil d'intrados 21 raccorde le nouveau tronçon de bord d'attaque 42 de ce demi-profil d'intrados 21 déplacé au tronçon terminal 24 de ce demi-profil d'intrados 21, le tronçon terminal 24 étant inchangé.

Le nouveau tronçon intermédiaire 33 du demi-profil d'extrados 11 et le nouveau tronçon intermédiaire 43 du demi-profil d'intrados 21 sont alors tangents respectivement au nouveau tronçon de bord d'attaque 32 du demi-profil d'extrados 11 et au nouveau tronçon de bord d'attaque 42 du demi-profil d'intrados 21 ainsi que respectivement au tronçon terminal 14 du demi-profil d'extrados 11 et au tronçon terminal 24 du demi-profil d'intrados 21. Le nouveau tronçon intermédiaire 33 du demi-profil d'extrados 11 et le nouveau tronçon intermédiaire 43 du demi-profil d'intrados 21 ne comportent toujours aucun point d'inflexion et ont des tangences évoluant de façon continue.

Ce déplacement du bord d'attaque 5 consécutif à la deuxième étape 52 provoque une modification de la ligne moyenne 17 du profil aérodynamique 10 dans la zone du bord d'attaque 5. La troisième distance $d$ est par exemple comprise entre 0.5% et 2% de la corde $c$ du profil aérodynamique 10. Ce déplacement du bord d'attaque 5 provoque également une faible augmentation de la corde $c$ du profil aérodynamique 10. Cette faible augmentation de la corde $c$ est de l'ordre de quelques centièmes de pourcentage, la nouvelle corde $c'$ du profil aérodynamique 10 étant définie par la relation suivante: $c' = \sqrt{c^2 + d^2}$. Par exemple, pour une troisième distance $d$ inférieure ou égale à 2% de la corde $c$ du profil aérodynamique 10, cette augmentation de la corde $c$ est inférieure à 0.02%.

Cette faible augmentation de la corde $c$ n'est qu'une conséquence du déplacement du bord d'attaque 5 du profil aérodynamique 10 selon la deuxième étape 52 et n'a pas d'effet directe sur l'amélioration des performances aérodynamiques du profil aérodynamique 10. En effet ce sont les modifications combinées du bord d'attaque 5, à savoir l'augmentation d'au moins un rayon du cercle initial de bord d'attaque 15,25 du demi-profil d'extrados 11 et/ou d'extrados 21 et son déplacement, qui sont à l'origine de l'amélioration de ces performances aérodynamiques du profil aérodynamique 10.

Ce déplacement du bord d'attaque 5 qu'il fasse suite à une modification des profils aérodynamiques 10 uniquement pour son demi-profil d'extrados 11, uniquement pour son demi-profil d'intrados 21 ou bien selon ses demi-profils d'extrados 11 et d'intrados 21, provoque une diminution des incidences positive $\alpha'_{dp}$ et négative $\alpha'_{dn}$ de décrochage de la pale 1 modifiée plus importante que pour une pale 1 dont uniquement le rayon du cercle initial de bord d'attaque 15,25 d'un ou bien des deux demi-profils 11,21 a été modifié en modifiant l'écoulement d'air sur les demi-profils d'extrados 11 et d'intrados 21 de la pale 1 modifiée.

Un premier graphique montrant cette diminution des incidences positive $\alpha_{dp}$ et négative $\alpha_{dn}$ de décrochage de la pale 1 dont les profils aérodynamiques 10 sont modifiés en appliquant les deux étapes 51-52 de la méthode d'amélioration d'une pale 1 est représenté sur la figure 10. Ce graphique représente la variation du coefficient de portance $Cz$ de la pale 1 en fonction de l'incidence $\alpha$ de la pale 1 vis-à-vis de l'écoulement d'air sur la pale 1 d'une part selon un premier graphe 7 pour une pale 1 non modifiée et d'autre part selon un second graphe 8 pour une pale 1 modifiée. L'incidence $\alpha$ est en abscisse et le coefficient de portance $Cz$ en ordonnée.

On constate que les incidences positive $\alpha'_{dp}$ et négative $\alpha'_{dn}$ de décrochage de la pale 1 modifiée selon les deux étapes 51-52 représentées sur le second graphe 8 sont inférieures aux incidences positive $\alpha_{dp}$ et négative $\alpha_{dn}$ de décrochage de la pale non modifiée représentées sur le premier graphe 7.

On constate également que pour une incidence $\alpha$ négative sensiblement égale à -5°, une pale non modifiée fonctionne proche de son incidence négative $\alpha_{dn}$ de décrochage, le point A correspondant ne se situant pas sur la partie linéaire du premier graphe 7, alors que le point G correspondant à une même incidence $\alpha$ négative sensiblement égale à -5° est situé sur la partie linéaire du second graphe 8 de la pale 1 modifiée fonctionnant ainsi avec une incidence plus éloignée de son incidence négative $\alpha'_{dn}$ de décrochage.

En conséquence, les performances aérodynamiques de la pale 1 modifiée sont plus importantes que celles de la pale non modifiée, comme précédemment évoqué et représenté sur la figure 12, et cette pale 1 modifiée peut fournir, pour une même puissance consommée $Pc$, une force aérodynamique $F$ supérieure à celle fournie par une pale non modifiée. De même, une telle pale 1 modifiée nécessite une puissance consommée inférieure à une pale non modifiée pour être entraînée en rotation afin de fournir la force aérodynamique $F$ nécessaire. Par exemple, pour une seconde hélice 65 d'un hélicoptère hybride 60 de tonnage moyen utilisant de telles pales 1 modifiées selon les deux étapes 51-52, l'économie de puissance obtenue peut être de l'ordre de 100 kilowatts.

Les modifications appliquées aux profils aérodynamiques 10 de la pale 1 selon chacune des étapes 51-52 peuvent aussi être influencées par l'épaisseur relative de ces profils aérodynamiques 10, comme représenté sur le second graphique de la figure 11. Ce second graphique représente une première enveloppe 55 de variation d'un premier rapport entre le rayon $r_1$ du nouveau cercle de bord d'attaque 35 d'un demi-profil d'extrados 11 par le rayon $r$ du cercle initial de bord d'attaque 15 de ce demi-profil d'extrados 11 en fonction des variations de l'épaisseur relative du profil aérodynamique 10. Ce second graphique représente une deuxième enveloppe 56 de variation d'un second rapport entre le rayon $r'_1$ du nouveau cercle de bord d'attaque 45 d'un demi-profil d'intrados 21 par le rayon $r'$ du cercle initial de bord d'attaque 25 d'un demi-profil d'intrados 21 en fonction des variations de l'épaisseur relative du profil aérodynamique 10. L'épaisseur relative du profil aérodynamique 10 est en abscisse et les premier et second rapports en ordonnée.

Les variations de ces rapports sont représentées sur la figure 11 pour des profils aérodynamiques 10 dont l'épaisseur relative est comprise entre 7.5% et 12%, la méthode d'amélioration d'une pale 1 selon l'invention étant particulièrement adaptée aux pales formées de ces profils aérodynamiques 10. Toutefois, cette méthode d'amélioration d'une pale 1 peut également être appliquée à des pales 1 formées de profils aérodynamiques 10 dont l'épaisseur relative est différente.

On constate que le premier rapport concernant le nouveau cercle de bord d'attaque 35 d'un demi-profil d'extrados 11, dont la variation est représentée par la première enveloppe 55, est peu influencé par l'augmentation de l'épaisseur relative du profil aérodynamique 10 contrairement au second rapport concernant le nouveau cercle de bord d'attaque 45 d'un demi-profil d'intrados 21, dont la variation est représentée par la deuxième enveloppe 56 et qui a tendance à diminuer lorsque l'épaisseur relative du profil aérodynamique augmente.

Le second graphique représente également une troisième enveloppe 57 de variation de la troisième distance *d* de déplacement du bord d'attaque 5 en fonction des variations de l'épaisseur relative du profil aérodynamique 10. L'épaisseur relative du profil aérodynamique 10 est en abscisse et la troisième distance *d,* exprimée en pourcentage de la corde *c,* en ordonnée. On constate que la largeur de cette troisième enveloppe 57 a tendance à diminuer lorsque l'épaisseur relative du profil aérodynamique 10 augmente, la valeur moyenne de cette troisième enveloppe 57 étant sensiblement constante.

Enfin, la méthode d'amélioration d'une pale 1 peut aussi comporter une troisième étape 53 de fabrication d'une pale 1 visant à fabriquer une pale 1 définie par les profils aérodynamiques 10 modifiés lors des étapes précédentes. Ces profils aérodynamiques 10 peuvent être modifiés selon la seule première étape 51 ou bien les première et deuxième étapes 51,52.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

**Revendications**

1. Méthode d'amélioration d'une pale (1), ladite pale (1) s'étendant selon une direction longitudinale (X) en envergure d'une première extrémité (3) à une seconde extrémité (4) et selon une direction transversale (Y) d'un bord d'attaque (5) vers un bord de fuite (6), ladite pale (1) comportant des sections transversales successives, chaque section transversale étant définie par un profil aérodynamique (10), chaque profil aérodynamique (10) étant défini par deux demi-profils (11,21) incluant un demi-profil d'extrados (11) et un demi-profil d'intrados (21), lesdits deux demi-profils (11,21) comportant un tronçon de bord d'attaque (12,22), un tronçon intermédiaire (13,23) et un tronçon terminal (14,24), ledit tronçon de bord d'attaque (12,22) de chaque demi-profil (11,21) étant formé par une portion d'un cercle initial de bord d'attaque (15,25),
ladite méthode comportant une première étape (51) de modification d'au moins un demi-profil (11,21) de chaque profil aérodynamique (10), une deuxième étape (52) de déplacement dudit bord d'attaque (5) pour chaque profil aérodynamique (10) de ladite pale (1) et une troisième étape (53) de fabrication de ladite pale (1) selon lesdits profils aérodynamiques (10) modifiés,
ladite première étape (51) étant munie des sous-étapes suivantes :

- augmentation (511) du rayon dudit cercle initial de bord d'attaque (15,25) dudit au moins un demi-profil (11,21) afin de former au moins un nouveau cercle de bord d'attaque (35,45) dudit au moins un demi-profil (11,21) dont une portion constitue un nouveau tronçon de bord d'attaque (32,42) dudit au moins un demi-profil (11,21), ledit nouveau cercle de bord d'attaque (35,45) étant tangent audit cercle initial de bord d'attaque (15,25) dudit au moins un demi-profil (11,21) au niveau dudit bord d'attaque (5), et
- définition (512) d'un nouveau tronçon intermédiaire (33,43) dudit au moins un demi-profil (11,21) remplaçant ledit tronçon intermédiaire (13,23) dudit au moins un demi-profil (11,21) et raccordant ledit nouveau cercle de bord d'attaque (35,45) dudit au moins un demi-profil (11,21) audit tronçon terminal (14,24) dudit au moins un demi-profil (11,21) afin d'augmenter une incidence négative de décrochage de ladite pale (1),

ladite deuxième étape (52) étant munie des sous-étapes suivantes :

- déplacement (521) dudit bord d'attaque (5) de chaque profil aérodynamique (10) de ladite pale (1) d'une troisième distance d perpendiculairement à un segment de droite (16) reliant ledit bord d'attaque (5) et ledit bord de fuite (6), dudit demi-profil d'intrados (21) vers ledit demi-profil d'extrados (11), ledit tronçon de bord d'attaque (12,22) initial ou bien, le cas échéant, ledit nouveau tronçon de bord d'attaque (32,42) desdits deux demi-profils (11,21) dudit profil aérodynamique (10) étant également déplacés, et

- définition (522) d'un nouveau tronçon intermédiaire (33,43) desdits deux demi-profils (11,21) raccordant respectivement ledit tronçon de bord d'attaque (12,22) initial ou bien, le cas échéant, ledit nouveau tronçon de bord d'attaque (32,42) desdits deux demi-profils (11,21) audit tronçon terminal (14,24) desdits deux demi-profils (11,21).

2. Méthode selon la revendication 1,
   **caractérisée en ce que** lors de ladite première étape (51), lesdits deux demi-profils (11,21) de chaque profil aérodynamique (10) sont modifiés.

3. Méthode selon l'une quelconque des revendications 1 à 2,
   **caractérisée en ce que** pour chaque profil aérodynamique (10) de ladite pale (1), le rayon dudit nouveau cercle de bord d'attaque (35) dudit demi-profil d'extrados (11) est compris entre 110% à 140% dudit rayon dudit cercle initial de bord d'attaque (15) dudit demi-profil d'extrados (11) et le rayon dudit nouveau cercle de bord d'attaque (45) dudit demi-profil d'intrados (21) est compris entre 115% à 220% dudit rayon dudit cercle initial de bord d'attaque (25) dudit demi-profil d'intrados (11).

4. Méthode selon l'une quelconque des revendications 1 à 3,
   **caractérisée en ce que** pour ledit au moins un demi-profil (11,21) de chaque profil aérodynamique (10) de ladite pale (1), ledit nouveau tronçon intermédiaire (33,43) débute sur ledit nouveau tronçon de bord d'attaque (32,42) à une première distance transversale minimale dudit bord d'attaque (5) comprise entre 0.5% et 5% d'une corde ($c$) dudit profil aérodynamique (10) et se raccorde audit tronçon terminal (14,24) à une deuxième distance transversale dudit bord d'attaque (5) égale au maximum à 25% de ladite corde ($c$), ladite corde ($c$) étant égale à une distance entre ledit bord d'attaque (5) et ledit bord de fuite (6) dudit profil aérodynamique (10).

5. Méthode selon l'une quelconque des revendications 1 à 4,
   **caractérisée en ce que** ladite troisième distance $d$ est comprise entre 0.5% et 2 % d'une corde ($c$) dudit profil aérodynamique (10), ladite corde ($c$) étant égale à une distance entre ledit bord d'attaque (5) et ledit bord de fuite (6) dudit profil aérodynamique (10).

6. Méthode selon l'une quelconque des revendications 1 à 5,
   **caractérisée en ce que** pour ledit au moins un demi-profil (11,21) de chaque profil aérodynamique (10) de ladite pale (1), ledit nouveau tronçon intermédiaire (33,43) ne comporte aucun point d'inflexion.

7. Méthode selon l'une quelconque des revendications 1 à 6,
   **caractérisée en ce que** pour ledit au moins un demi-profil (11,21) de chaque profil aérodynamique (10) de ladite pale (1), ledit nouveau tronçon intermédiaire (33,43) est formé par un polynôme de degré 3.

8. Méthode selon l'une quelconque des revendications 1 à 7,
   **caractérisée en ce qu'**une épaisseur ($e$) égale à une distance maximale entre ledit demi-profil d'extrados (11) et ledit demi-profil d'intrados (12) dudit profil aérodynamique (10) est inchangée pour chaque profil aérodynamique (10).

**Patentansprüche**

1. Verfahren zum Verbessern eines Rotorblatts (1), wobei sich das Rotorblatt (1) in einer Längsrichtung (X) in der Spannweite von einem ersten Ende (3) zu einem zweiten Ende (4) und in einer Querrichtung (Y) von einer Vorderkante (5) zu einer Hinterkante (6) erstreckt, wobei das Rotorblatt (1) aufeinanderfolgende Querschnitte aufweist, wobei jeder Querschnitt durch ein aerodynamisches Profil (10) definiert ist, wobei jedes aerodynamische Profil (10) durch zwei Halbprofile (11, 21) definiert ist, die ein oberes Halbprofil (11) und ein unteres Halbprofil (21) umfassen, wobei die beiden Halbprofile (11, 21) einen Vorderkantenabschnitt (12, 22), einen Zwischenabschnitt (13, 23) und einen Endabschnitt (14, 24) aufweisen, wobei der Vorderkantenabschnitt (12, 22) jedes Halbprofils (11, 21) durch einen Teil eines Anfangs-Vorderkantenkreises (15, 25) gebildet wird,

   wobei das Verfahren einen ersten Schritt (51) des Modifizierens mindestens eines Halbprofils (11, 21) jedes aerodynamischen Profils (10), einen zweiten Schritt (52) des Verschiebens der Vorderkante (5) für jedes aerodynamische Profil (10) des Rotorblatts (1) und einen dritten Schritt (53) des Fertigens des Rotorblatts (1) gemäß den modifizierten aerodynamischen Profilen (10) umfasst,
   wobei der erste Schritt (51) die folgenden Unterschritte umfasst:

- Vergrößern (511) des Radius des Anfangs-Vorderkantenkreises (15, 25) des mindestens einen Halbprofils (11, 21), um mindestens einen neuen Vorderkantenkreis (35, 45) des mindestens einen Halbprofils (11, 21) zu bilden, von dem ein Teil einen neuen Vorderkantenabschnitt (32, 42) des mindestens einen Halbprofils (11, 21) bildet, wobei der neue Vorderkantenkreis (35, 45) an der Vorderkante (5) tangential zu dem Anfangs-Vorderkantenkreis (15, 25) des mindestens einen Halbprofils (11, 21) ist, und
- Definieren (512) eines neuen Zwischenabschnitts (33, 43) des mindestens einen Halbprofils (11, 21), der den Zwischenabschnitt (13, 23) des mindestens einen Halbprofils (11, 21) ersetzt und den neuen Vorderkantenkreis (35, 45) des mindestens einen Halbprofils (11, 21) mit dem Endabschnitt (14, 24) des mindestens einen Halbprofils (11, 21) verbindet, um einen negativen Strömungsabriss-Anstellwinkel des Rotorblatts (1) zu vergrößern,

wobei der zweite Schritt (52) die folgenden Unterschritte aufweist:

- Verschieben (521) der Vorderkante (5) jedes aerodynamischen Profils (10) des Rotorblatts (1) um einen dritten Abstand d senkrecht zu einem Geradensegment (16), das die Vorderkante (5) und die Hinterkante (6) verbindet, von dem unteren Halbprofil (21) zu dem oberen Halbprofil (11), wobei der anfängliche Vorderkantenabschnitt (12, 22) oder gegebenenfalls der neue Vorderkantenabschnitt (32, 42) der beiden Halbprofile (11, 21) des aerodynamischen Profils (10) ebenfalls verschoben wird, und
- Definieren (522) eines neuen Zwischenabschnitts (33, 43) der beiden Halbprofile (11, 21), der jeweils den Anfangs-Vorderkantenabschnitt (12, 22) oder gegebenenfalls den neuen Vorderkantenabschnitt (32, 42) der beiden Halbprofile (11, 21) mit dem Endabschnitt (14, 24) der beiden Halbprofile (11, 21) verbindet.

2. Verfahren nach Anspruch 1,
**dadurch gekennzeichnet, dass** während des ersten Schrittes (51) beide Halbprofile (11, 21) jedes aerodynamischen Profils (10) modifiziert werden.

3. Verfahren nach einem der Ansprüche 1 bis 2,
**dadurch gekennzeichnet, dass** für jedes aerodynamische Profil (10) des Rotorblatts (1) der Radius des neuen Vorderkantenkreises (35) des oberen Halbprofils (11) 110% bis 140% des Radius des Anfangs-Vorderkantenkreises (15) des oberen Halbprofils (11) beträgt und dass der Radius des neuen Vorderkantenkreises (45) des unteren Halbprofils (21) zwischen 115% und 220% des Radius des Anfangs-Vorderkantenkreises (25) des unteren Halbprofils (11) beträgt.

4. Verfahren nach einem der Ansprüche 1 bis 3,
**dadurch gekennzeichnet, dass** für das mindestens eine Halbprofil (11, 21) jedes aerodynamischen Profils (10) des Rotorblatts (1) der neue Zwischenabschnitt (33, 43) an dem neuen Vorderkantenabschnitt (32, 42) in einem ersten minimalen Querabstand von der Vorderkante (5) von zwischen 0,5 % und 5 % einer Sehne (c) des aerodynamischen Profils (10) beginnt und sich mit dem Endabschnitt (14, 24) in einem zweiten Querabstand von der Vorderkante (5) verbindet, der höchstens 25 % der Sehne (c) entspricht, wobei die Sehne (c) gleich einem Abstand zwischen der Vorderkante (5) und der Hinterkante (6) des aerodynamischen Profils (10) ist.

5. Verfahren nach einem der Ansprüche 1 bis 4,
**dadurch gekennzeichnet, dass** der dritte Abstand d zwischen 0,5% und 2% einer Sehne (c) des aerodynamischen Profils (10) beträgt, wobei die Sehne (c) gleich einem Abstand zwischen der Vorderkante (5) und der Hinterkante (6) des aerodynamischen Profils (10) ist.

6. Verfahren nach einem der Ansprüche 1 bis 5,
**dadurch gekennzeichnet, dass** für das mindestens eine Halbprofil (11, 21) jedes aerodynamischen Profils (10) des Rotorblatts (1) der neue Zwischenabschnitt (33, 43) keinen Wendepunkt aufweist.

7. Verfahren nach einem der Ansprüche 1 bis 6,
**dadurch gekennzeichnet, dass** für das mindestens eine Halbprofil (11, 21) jedes aerodynamischen Profils (10) des Rotorblatts (1) der neue Zwischenabschnitt (33, 43) durch ein Polynom dritten Grades gebildet wird.

8. Verfahren nach einem der Ansprüche 1 bis 7,
**dadurch gekennzeichnet, dass** eine Dicke (e), die gleich einem maximalen Abstand zwischen dem oberen Halbprofil (11) und dem unteren Halbprofil (12) des aerodynamischen Profils (10) ist, für jedes aerodynamische Profil (10) unverändert bleibt.

**Claims**

1. Method for improving a blade (1), the blade (1) extending in a longitudinal direction (X) with a span from a first end (3) to a second end (4) and in a transverse direction (Y) of a leading edge (5) towards a trailing edge (6), the blade (1) comprising successive cross-sections, each cross-section being defined by an aerodynamic profile (10), each aerodynamic profile (10) being defined by two half-profiles (11, 21) including an extrados half-profile (11) and an intrados half-profile (21), the two half-profiles (11, 21) comprising a leading edge portion (12, 22), an intermediate portion (13, 23) and a terminal portion (14, 24), the leading edge portion (12, 22) of each half-profile (11, 21) being formed by a portion of an initial leading edge circle (15, 25),
   the method comprising a first step (51) of modifying at least one half-profile (11, 21) of each aerodynamic profile (10), a second step (52) of moving the leading edge (5) for each aerodynamic profile (10) of the blade (1) and a third step (53) of producing the blade (1) in accordance with the modified aerodynamic profiles (10),
   the first step (51) being provided with the following sub-steps:

   - increasing (511) the radius of the initial leading edge circle (15, 25) of the at least one half-profile (11, 21) in order to form at least one new leading edge circle (35, 45) of the at least one half-profile (11, 21) of which a portion constitutes a new leading edge portion (32, 42) of the at least one half-profile (11, 21), the new leading edge circle (35, 45) being tangential to the initial leading edge circle (15, 25) of the at least one half-profile (11, 21) in the region of the leading edge (5), and
   - defining (512) a new intermediate portion (33, 43) of the at least one half-profile (11, 21) replacing the intermediate portion (13, 23) of the at least one half-profile (11, 21) and connecting the new leading edge circle (35, 45) of the at least one half-profile (11, 21) to the terminal portion (14, 24) of the at least one half-profile (11, 21) in order to increase a negative breakaway incidence of the blade (1),

   the second step (52) being provided with the following sub-steps:

   - movement (521) of the leading edge (5) of each aerodynamic profile (10) of the blade (1) by a third distance $d$ perpendicularly to a line segment (16) connecting the leading edge (5) and the trailing edge (6), of the intrados half-profile (21) towards the extrados half-profile (11), the initial leading edge portion (12, 22) or, where necessary, the new leading edge portion (32, 42) of the two half-profiles (11, 21) of the aerodynamic profile (10) also being moved, and
   - defining (522) a new intermediate portion (33, 43) of the two half-profiles (11, 21) which connect the initial leading edge portion (12, 22) or, where necessary, the new leading edge portion (32, 42) of the two half-profiles (11, 21) to the terminal portion (14, 24) of the two half-profiles (11, 21).

2. Method according to claim 1,
   **characterised in that**, during the first step (51), the two half-profiles (11, 21) of each aerodynamic profile (10) are modified.

3. Method according to either claim 1 or claim 2,
   **characterised in that**, for each aerodynamic profile (10) of the blade (1), the radius of the new leading edge circle (35) of the extrados half-profile (11) is between 110% and 140% of the radius of the initial leading edge circle (15) of the extrados half-profile (11) and the radius of the new leading edge circle (45) of the intrados half-profile (21) is between 115% and 220% of the radius of the initial leading edge circle (25) of the intrados half-profile (11).

4. Method according to any one of claims 1 to 3,
   **characterised in that**, for the at least one half-profile (11, 21) of each aerodynamic profile (10) of the blade (1), the new intermediate portion (33, 43) begins on the new leading edge portion (32, 42) at a first minimum transverse distance from the leading edge (5) between 0.5% and 5% of a chord (c) of the aerodynamic profile (10) and connects to the terminal portion (14, 24) at a second transverse distance from the leading edge (5) equal to a maximum of 25% of the chord (c), the chord (c) being equal to a distance between the leading edge (5) and the trailing edge (8) of the aerodynamic profile (10).

5. Method according to any one of claims 1 to 4,
   **characterised in that** the third distance d is between 0.5% and 2% of a chord (c) of the aerodynamic profile (10), the chord (c) being equal to a distance between the leading edge (5) and the trailing edge (6) of the aerodynamic profile (10).

6. Method according to any one of claims 1 to 5,
**characterised in that**, for the at least one half-profile (11, 21) of each aerodynamic profile (10) of the blade (1), the new intermediate portion (33, 43) does not comprise any inflection point.

7. Method according to any one of claims 1 to 6,
**characterised in that**, for the at least one half-profile (11, 21) of each aerodynamic profile (10) of the blade (1), the new intermediate portion (33, 43) is formed by a polynomial of degree 3.

8. Method according to any one of claims 1 to 7,
**characterised in that** a thickness ($e$) equal to a maximum distance between the extrados half-profile (11) and the intrados half-profile (12) of the aerodynamic profile (10) is unchanged for each aerodynamic profile (10).

Fig.1

Fig.2

Fig.3

## Fig.4

511

512

51

521

522

52

53

## Fig.5

10

11

12

5

27

27"

16

B    B'  B"

27',15

22

21

Fig.6

EP 3 527 491 B1

Fig.7

Fig.8

Fig.9

Fig.10

Fig.11

Fig.12

EP 3 527 491 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2626841
- FR 2765187
- US 20070187549 A
- EP 0103478 A
- JP 2002166891 A
- US 20090257884 A
- US 20080145219 A
- US 20130170984 A
- EP 0911257 A